# EUROPEAN PATENT SPECIFICATION

(11) **EP 4 515 880 B1**
(45) Date of publication and mention of the grant of the patent: **22.04.2026**
(21) Application number: 23722643.6
(22) Date of filing: 28.04.2023
(51) Int. Cl.: H04Q 11/00, G02B 6/35, H04J 14/02

(54) **OPTICAL SWITCH**
OPTISCHER SCHALTER
COMMUTATEUR OPTIQUE

(30) Priority: 29.04.2022 GB 202206310; 29.04.2022 GB 202206315; 16.09.2022 GB 202213654; 21.12.2022 GB 202219348; 21.12.2022 GB 202219354; 22.02.2023 GB 202302545
(43) Date of publication of application: 05.03.2025
(73) Proprietor: Huber+Suhner Polatis Limited, Cambridge, Cambridgeshire CB4 0WN (GB)
(72) Inventor: MONTGOMERY, David James, Cambridge, Cambridgeshire CB4 0WN (GB); WILKINSON, Peter John, Cambridge, Cambridgeshire CB4 0WN (GB)
(74) Representative: Slingsby Partners LLP
(86) International application number: PCT/GB2023/051137
(87) International publication number: WO 2023/209391

(56) References cited:
- US-A1- 2003 021 522
- US-A1- 2018 278 359
- US-B2- 11 079 551
- US-B2- 6 798 941

## Description

### BACKGROUND

Optical switches are used in optical telecommunication systems to route optical signals through networks. As optical telecommunications systems have become more popular, the quantity of data carried through the networks has increased, putting greater capacity demands on the switches. It is known to use wavelength division multiplexed (WDM) signals to enable each optical fibre in the network to carry multiple data channels, those data channels separated by unique central frequencies and having non-overlapping bandwidths. Wavelength selective switches (WSSs) are used to route WDM signals through the network.

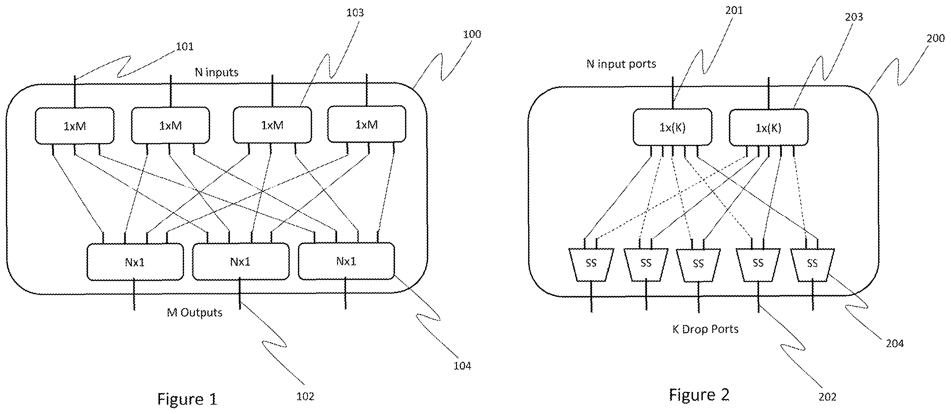

Figure 1 illustrates schematically a known MxN WSS 100. The MxN switch comprises N input ports 101 and M output ports 102. Each port carries multiple data channels. A bank of 1xM WSSs 103 splits the multiplexed signal from each input port into its separate frequency channels. The demultiplexed data channels are then directed to the M output ports. A bank of Nx1 WSSs 104 at the output combines the data channels into a set of multiplexed signals for output via the output ports 102. In this way, the MxN switch is able to redirect any data channel from an input port to any data channel in an output port, subject to the condition that two channels with overlapping frequencies are not routed to the same output port.

Figure 2 illustrates schematically a known switch referred to as an add-drop WSS 200. Add-drop WSS 200 is a special type of WSS in which N input ports 201 are connected to K output ports 202, where K>N. A bank of 1xK WSSs 203 splits the multiplexed signal from each input port into its separate frequency channels. The demultiplexed data channels are then directed to K space switches 204. Each space switch 204 can accept data from any of the 1xK WSSs but can only output data from one of the input ports at a time. The output of each space switch 204 is then output from an output port 202, otherwise known as a drop port. Space switches are simpler to implement than Nx1 switches, and hence the add-drop WSS of figure 2 is preferable to the MxN WSS of figure 1. This is particularly the case when K is much bigger than N, and the data density in the K output ports is much lower than in the N input ports.

Both the WSSs of figure 1 and 2 are reversible. For example, edge reconfigurable optical add-drop multiplexers (ROADM) are used for transferring optical data between core dense wavelength divisional multiplexing (DWDM) and more coarse wavelength division multiplexing (CWDM). An add-drop WSS of the type in figure 2 is used in the "dropping" direction shown in figure 2 to transfer from DWDM to CWDM, and in the reverse "adding" direction (from K drop input ports to N output ports) to transfer from CWDM to DWDM.

The switches shown in figures 1 and 2 are typically implemented by electronic conversion, for example by absorbing light and emitting it again in the desired format. However, electronic conversion has high power requirements and introduces a significant lag in the transmission through the switch. Purely optical methods require much less power than electronic implementations and also enable faster transmission.

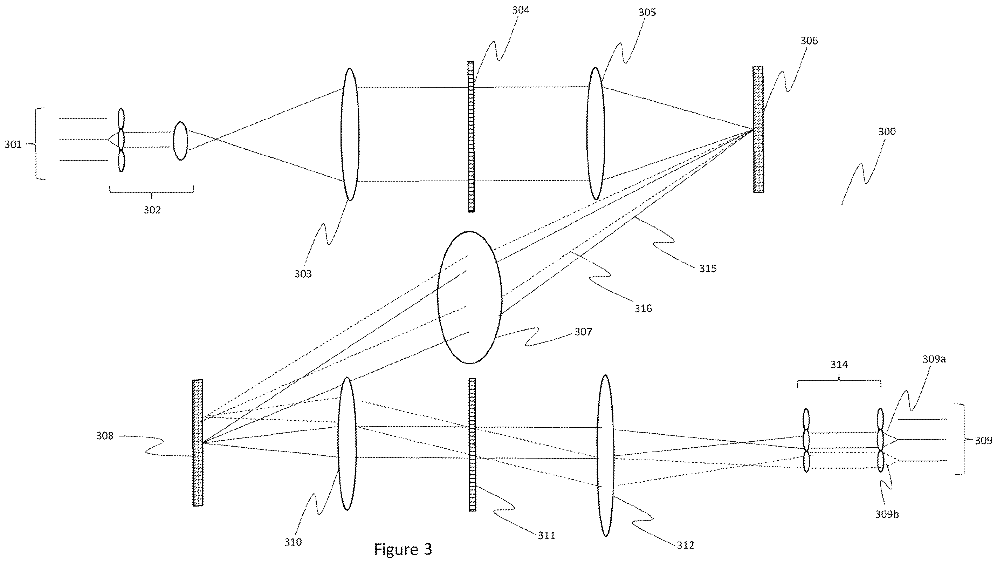

Figure 3 illustrates a known optical implementation 300 of the MxN WSS of figure 1 or the add-drop WSS of figure 2. N input ports 301 each carry multiple channels. Light through each input port 301 is directed to an imaging telescope 302 where it is focused to a point, and then imaged by a 4F optical system 303 and 305. This produces parallel light beams which are then split into their constituent frequency channels by diffraction grating 304. The dispersed channels are focussed through lens 305 to a spatial light modulator (SLM) plane 306, which is typically implemented by a liquid crystal on silicon (LCoS) device. The LCoS device applies a holographic beam deflection to the spectrum of channels incident on it to direct each channel from the N input spectra towards the M spectra on a second SLM plane 308. The deflected channels pass through a Fourier lens (or lens group) 307 to form the conjugate plane before reaching the second SLM plane 308. The second SLM plane 308 is typically an LCoS or optical microelectromechanical system (MEMS). The second SLM plane 308 applies an angle deflection to the light incident on it to direct it towards the output ports 309. The M deflected spectra pass through a lens 310 to generate parallel light beams, which then travel through diffraction grating 311 to recombine the spectra for each of the M output ports 309. The recombined spectra then pass through 4F optical system 312. Fourier lens arrangement 314 is used to select the port which the multiplexed signals are then output through.

An undeviated beam 315 is aligned with the central output port 309a. An angular deflection to this beam channel 316 of a certain magnitude selects an alternative output port 309b. The deflection of the second SLM plane 308 corrects for the incidence angle from the different spectra on the first SLM plane 306 so that light from any of the input port spectra can be coupled to any of the output ports.

For the MxN WSS implementation, the second SLM plane 308 of figure 3 is a pixelated SLM such as an LCoS. For the add-drop WSS implementation, the second SLM plane 308 of figure 3 can be a MEMS array that is pixelated in one direction only (vertical) in order to act as the space switches. In this case, the second SLM plane 308 may be before or after the second diffraction grating 311.

These known optical WSSs utilise two separate SLM devices, one for each of the SLM planes 306, 308. SLM devices are expensive and limit the compactness of the WSS. Even with the simpler add-drop WSS, the switching is between a vertical column of input spectra on the first SLM plane 306 to a vertical column of space switch areas on the second SLM plane 308. The large deflection angle on the two SLM planes required to switch light from the top spectra on the first SLM plane 306 to the bottom space switch on the second SLM plane 308 limits the number of accessible output ports M that can be obtained with this arrangement, and hence limits the capacity of a switch having this type of architecture.

Two adWSS structures may be incorporated into a two layer edge reconfigurable optical add-drop multiplexer (ROADM) wavelength selective switch, such as that described in US 2022/0052778. Four SLM planes are required for each ROADM switch. US 2022/0052778 utilises opposing SLM planes as part of its NxN switch, which necessitates utilisation of separate SLM devices.

US 2003/021522 discloses an optical cross-connect comprising an input port, at least two output ports, a dispersive element, and a switch core. The switch core comprises a cylindrical ATO element, two cylindrical relay lenses, and two opposing deflector arrays for independently switching at least one wavelength channel between ports.

US 2018/278359 discloses a WDM reconfigurable optical switch comprising an input port, output ports, a diffractive element, relay optics and a reconfigurable holographic array. The reconfigurable holographic array comprises a 2D array of reconfigurable sub-holograms arranged so as to selectively steer wavelength channels towards selected output ports.

US 6,798,551 discloses a multi-wavelength optical switch including an array of mirrors tiltable about two axes, to both control the switching and to provide variable power transmission through the switch.

US 11,079,551 discloses a twin MxN WSS including two MxN WSSs. The first MxN WSS steers first beams using add/drop port beam steering. The second MxN WSS steers second beams using common port beam steering. The first MxN WSS includes an optical element which causes the first and second beams to be directed in different directions.

### SUMMARY OF THE INVENTION

According to an aspect of the invention, there is provided an optical switch comprising: a set of first input ports, each first input port configured to transport an optical signal having at least one component frequency channel; a set of first output ports, each first output port configured to transport an optical signal having at least one component frequency channel; a first programmable deflection plane configured to deflect beams incident on it to form a first deflected array of beams; a second programmable deflection plane configured to deflect beams incident on it to form a second deflected array of beams; a first demultiplexer configured to separate light from the set of first input ports into its component frequency channels to form the beams incident on the first programmable deflection plane; a first multiplexer configured to combine the second deflected array of beams from the second programmable deflection plane into combined signals incident on the set of first output ports; and a beam steering optical element group configured to transfer the first deflected array of beams from the first programmable deflection plane to the beams incident on the second programmable deflection plane; wherein the incidence normal of the first programmable deflection plane is within the same hemispherical angular area as the incidence normal of the second programmable deflection plane; and wherein the dispersion direction in the dispersion plane of spectra of the beams formed on the second programmable deflection plane with respect to the diffraction order of the first multiplexer is such that the combined signals from the first multiplexer match the set of first output ports.

The dispersion direction in the dispersion plane of the first multiplexer may be the same sign as the dispersion direction in the dispersion plane of the first demultiplexer.

The first multiplexer may be the same as the first demultiplexer.

The beam steering optical element group may be configured to form a non-inverted image of the first programmable deflection plane on the second programmable deflection plane in the dispersion plane.

The beam steering optical element group may be configured to form a Fourier conjugate image of the first programmable deflection plane on the second programmable deflection plane orthogonal to the dispersion plane.

The beam steering optical element group may comprise: a first optical element and a second optical element, the first and second optical elements configured to divert the first deflected array of beams from the first programmable deflection plane towards a beam steering optical device; the beam steering optical device configured to redirect the diverted first deflected array of beams to form a redirected first deflected array of beams; and a third optical element and a fourth optical element, the third and fourth optical elements configured to divert the redirected first deflected array of beams from the beam steering optical device towards the second programmable deflection plane.

Each of the first optical element, second optical element, third optical element, fourth optical element and beam steering optical device may have optical power.

The dispersion direction in the dispersion plane of the first multiplexer may be the opposite sign as the dispersion direction in the dispersion plane of the first demultiplexer.

The beam steering optical element group may be configured to form an inverted image of the first programmable deflection plane on the second programmable deflection plane in the dispersion plane.

The beam steering optical element group may be configured to form a Fourier conjugate image of the first programmable deflection plane on the second programmable deflection plane orthogonal to the dispersion plane.

The beam steering optical element group may comprise: a first optical element configured to divert the first deflected array of beams from the first programmable deflection plane towards a beam steering optical device; the beam steering optical device configured to redirect the diverted first deflected array of beams to form a redirected first deflected array of beams; and a second optical element configured to divert the redirected first deflected array of beams from the beam steering optical device towards the second programmable deflection plane.

Each of the first optical element, second optical element and beam steering optical device may have optical power.

The beam steering optical element group may comprise a lens assembly.

The lens assembly may comprise a spherical lens and a cylindrical lens with power only in the dispersion axis of the cylindrical lens.

The optical switch may further comprise: a first mirror segment configured to divert a portion of the first deflected array of beams from the first programmable deflection plane to a curved mirror; and a second mirror segment configured to divert the portion of the first deflected array of beams from the curved mirror to the second programmable deflection plane.

The optical switch may further comprise: a first mirror segment, a second mirror segment and a further beam steering optical device; the first mirror segment configured to divert a portion of the first deflected array of beams from the first programmable deflection plane to the further beam steering optical device; the further beam steering optical device configured to remap the portion of the first deflected array of beams to form a remapped portion of beams directed to the second mirror segment; and the second mirror segment configured to divert the remapped portion of beams from the further beam steering optical device to the curved mirror, and from the curved mirror to the second programmable deflection plane.

The optical switch may comprise a single spatial light modulator (SLM) panel comprising the first and second programmable deflection planes.

According to a further aspect of the invention, there is provided a reconfigurable optical add-drop multiplexer (ROADM) optical switch comprising the optical switch described above, and further comprising: a set of second input ports, each second input port configured to transport an optical signal having at least one component frequency channel; a set of second output ports, each second output port configured to transport an optical signal having at least one component frequency channel; a third programmable deflection plane configured to deflect beams from the set of second input ports incident on it to form a third deflected array of beams; a fourth programmable deflection plane configured to deflect beams incident on it to form a fourth deflected array of beams towards the set of second output ports; a second demultiplexer configured to separate light from the third programmable deflection plane into its component frequency channels towards the second programmable deflection plane; a second multiplexer configured to combine the first deflected array of beams from the first programmable deflection plane into combined signals towards the fourth programmable deflection plane; wherein the incidence normal of each of the first, second, third and fourth programmable deflection planes is within the same hemispherical angular area; and wherein the first demultiplexer and second multiplexer have the same dispersion direction; and wherein the second demultiplexer and first multiplexer have the same dispersion direction.

The first demultiplexer may be the same as the second multiplexer.

The second demultiplexer may be the same as the first multiplexer.

A single spatial light modulator (SLM) panel may comprise the first, second, third and fourth programmable deflection planes.

The switch may further comprise a mirror optic, the mirror optic comprising a pair of mirrors separated by a gap.

The switch may comprise a further mirror optic, the further mirror optic comprising a pair of mirrors separated by a gap.

The first lens assembly may comprise the first demultiplexer.

The first lens assembly may comprise a further two lenses having optical power along the respective steering axes of the two lenses.

The beam steering optical element group may comprise a second lens assembly.

The second lens assembly may comprise a spherical lens and a cylindrical lens with power only in the dispersion axis of the cylindrical lens.

The second lens assembly may comprise the first multiplexer.

The second lens assembly may comprise a further two lenses having optical power along the respective steering axes of the two lenses.

The beam steering optical device may comprise a lens and mirror assembly.

The lens and mirror assembly may comprise a cylindrical lens with optical power in the dispersion axis of the cylindrical lens, a pair of reflecting mirrors and a lens with optical power in the steering axis of the lens.

The optical path between the first programmable deflection plane and the second programmable deflection plane may comprise five elements with optical power.

The optical path between the first programmable deflection plane and the second programmable deflection plane may comprise the beam steering optical device, the spherical lens of the first lens assembly and the spherical lens of the second lens assembly.

The beam steering optical device may be configured to transfer demultiplexed beams.

The first demultiplexer may comprise at least one transit input port. The first multiplexer may comprise at least one transit output port. The first demultiplexer may be configured to direct the first deflected array of beams to the beam steering optical device. The first multiplexer may be configured to direct the first deflected array of beams from the beam steering optical device towards the second programmable deflection plane.

The optical path between the first programmable deflection plane and the second programmable deflection plane may comprise nine elements with optical power.

The optical path between the first programmable deflection plane and the second programmable deflection plane may comprise the beam steering optical device, the first lens assembly and the second lens assembly.

The beam steering optical device may be configured to transfer multiplexed beams.

The mirror optic may comprise at least one transit input port. The further mirror optic may comprise at least one transit output port. The mirror optic may be configured to direct the first deflected array of beams to the beam steering optical device and the further mirror optic may be configured to direct the first deflected array of beams from the beam steering optical device towards the second programmable deflection plane.

The first optical element configured to divert the first deflected array of beams from the first programmable deflection plane towards the beam steering optical device may be further configured to alter the configuration of the first deflected array of beams so as to generate or remove a gap between the first deflected array of beams.

The optical path between the first programmable deflection plane and the second programmable deflection plane may comprise a polarising beam splitter and a Faraday rotator.

### BRIEF DESCRIPTION OF THE FIGURES

The present invention will now be described by way of example with reference to the accompanying drawings. In the drawings:
Figure 1 illustrates a known MxN WSS;
Figure 2 illustrates a known add-drop WSS;
Figure 3 illustrates a known implementation of an MxN or add-drop WSS;
Figure 4 illustrates an MxN WSS;
Figure 5 illustrates two programmable deflection planes at an angle to each other;
Figure 6 illustrates programmable deflection planes being virtually relocated by local optics;
Figure 7 illustrates an MxN WSS;
Figure 8 illustrates the optical path of an exemplary beam steering optical element group comprising five optical elements;
Figure 9 illustrates an add-drop WSS;
Figure 10 illustrates an edge ROADM;
Figure 11 illustrates the optical path of a transit section of the edge ROADM of figure 10;
Figures 12a and 12b illustrate the optical path of a transit section of the edge ROADM of figure 10;
Figure 13 illustrates an edge ROADM;
Figure 14 illustrates a prism array implementation of a beam steering optical device;
Figure 15 illustrates the optical path of a transit section of the edge ROADM where the spectra are remapped;
Figure 16 illustrates an optical switch utilising three programmable deflection planes.
Figure 17 illustrates a further MxN WSS;
Figure 18 illustrates the optical path through an optical system of the MxN WSS;
Figure 19 illustrates an edge ROADM;
Figure 20 illustrates an edge ROADM;
Figure 21 illustrates a demultiplexer and a transit section;
Figure 22 illustrates an edge ROADM;
Figure 23 illustrates a mirror optic and a transit section;
Figure 24 illustrates another mirror optic and a transit section;
Figure 25 illustrates an alternative optical arrangement configured to direct light to and receive light from a transit section;
Figure 26 illustrates a mirror optic and a transit section; and
Figure 27 illustrates a demultiplexer and a transit section

### DETAILED DESCRIPTION

The following describes several exemplary optical switches which utilise two or more programmable deflection planes and a beam steering optical element group to optically route light from a set of input ports to a set of output ports. The described optical switches may be WSSs. These WSSs may be implemented as add-drop WSSs (adWSS), for example for transferring light from core DWDM networks to lower capacity CWDM networks. Alternatively, the described WSSs may be implemented as MxN WSSs. All the examples described herein use optical components to route the light through the switches. There is no absorption and re-emission of light.

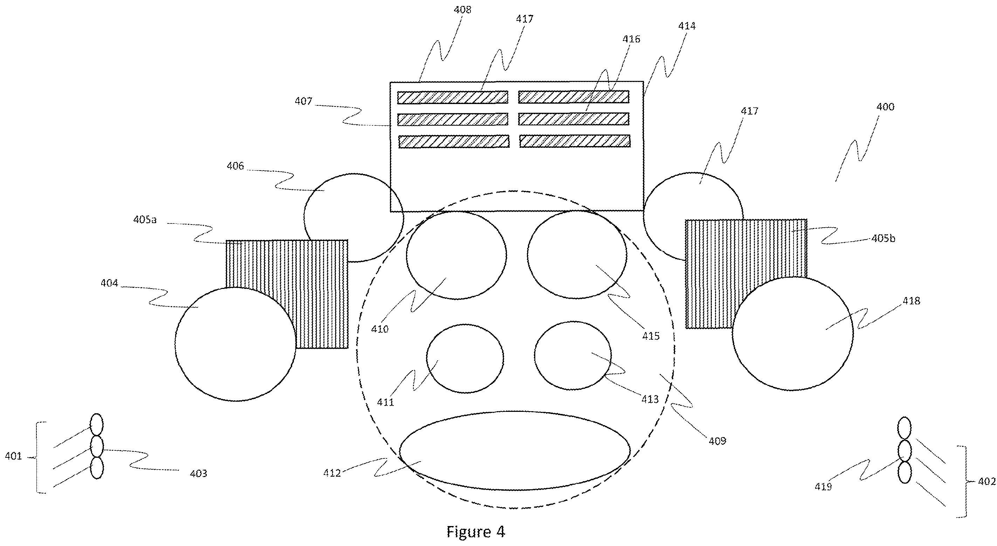

Figure 4 illustrates an MxN WSS 400 in which a single panel 407 comprises two programmable deflection planes 408, 414. This single panel may, for example, be an SLM device. Both the programmable deflection planes 408, 414 are spectral planes configured to deflect each beam of a dispersed optical signal individually.

In the MxN WSS of figure 4, N input ports 401 are routed to M output ports 402. Each port may comprise one or more optical fibres. Each port transports an optical signal having at least one component data channel. Typically, each port has a plurality of data channels. Each channel transports data. Each channel has a frequency band which has a different centre frequency to the other channels of that port. The channels of a port may have the same or different bandwidths. The bandwidths of the channels of a port are non-overlapping. As will be described below, each channel from each input port 401 may be routed to any individual output port 402.

The optical signals from the input ports 401 pass through coupling lenses 403 which form an optical beam of the N ports before a 4F imaging system. There is a coupling lens for each input port. Optical signals from the input ports 401 pass through a 4F imaging system provided by lenses 404 and 406. The optical signals are dispersed by diffraction grating 405a at the Fourier plane of lens 404. The diffraction grating 405a spatially separates the component frequency channels of the optical signal beams incident on it to form a set of dispersed optical signal beams. In other words, each optical signal from an input port is spread into its frequency spectrum by the diffraction grating 405a. Thus, the diffraction grating 405a acts to demultiplex each optical signal into its component data channels.

A first programmable deflection plane 408 is positioned in the optical path of the set of dispersed optical signals such that the set of dispersed optical signal beams form spectra 417 on the first programmable deflection plane 408. In the example of figure 4, three input ports 401 are illustrated, each of which forms a spectrum 417 on the first programmable deflection plane 408. Each spectrum forms an array of beams of the component data channels of the input port which are imaged on the first programmable deflection plane 408, each beam being a data channel. The first programmable deflection plane 408 applies a programmable deflection to each beam of the array of beams individually to form a deflected array of beams. The degree of deflection applied to each beam is so as to change the angle of that beam to direct its data channel on a path towards a selected one of the output ports 402. The deflection applied by the first programmable deflection plane 408 is reconfigurable. Thus, a controller providing a control signal to the first programmable deflection plane 408 may change the deflection applied by the first programmable deflection plane 408 to each individual beam of the spectra from each input port, so as to output the desired channels to the desired ports.

The deflected array of beams from the first programmable deflection plane 408 is incident on a beam steering optical element group 409. The beam steering optical element group 409 transfers the deflected array of beams from the first programmable deflection plane 408 onto the second programmable deflection plane 414. The beam steering optical element group 409 forms a non-inverted image of the first programmable deflection plane on the second programmable deflection plane in the dispersion plane. In other words, if the spectra on the first programmable deflection plane increase in wavelength from left to right across the first programmable deflection plane, then the spectra on the second programmable deflection plane also increase in wavelength from left to right across the second programmable deflection plane. On the other hand, if the spectra on the first programmable deflection plane decrease in wavelength from left to right across the first programmable deflection plane, then the spectra on the second programmable deflection plane also decrease in wavelength from left to right across the second programmable deflection plane. The beam steering optical element group 409 forms a Fourier conjugate image of the first programmable deflection plane on the second programmable deflection plane in a direction orthogonal to the dispersion plane.

In figure 4, the beam steering optical element group 409 comprises five optical elements: lenses 410, 411, 413 and 415 and beam steering optical device 412. Lenses 410 and 411 divert the deflected array of beams from the first programmable deflection plane 408 towards the beam steering optical device 412. The lenses 410 and 411 image the deflected spectra 417 onto the beam steering optical device 412. Lenses 410 and 411 are equal in focal length and are positioned one focal length apart from each other. Lens 410 is one focal length of lens 410 from the first programmable deflection plane. Lens 411 is one focal length of lens 411 from the beam steering optical device 412.

The beam steering optical device 412 redirects the diverted deflected array of beams towards the second programmable deflection plane 414. The beam steering optical device 412 is reflecting and in an imaging configuration. In other words, the beam steering optical device 412 has a focal length equal to half the focal length of each of lenses 410, 411, 413 and 415. The beam steering optical device 412 may be, for example, a curved mirror.

Lenses 413 and 415 divert the redirected array of beams from the beam steering optical device 412 towards the second programmable deflection plane. Lenses 413 and 415 are equal in focal length and are positioned one focal length apart from each other. Lens 413 is one focal length of lens 413 from the beam steering optical device 412. Lens 415 is one focal length of lens 415 from the second programmable deflection plane.

In the plane orthogonal to the dispersion axis, the lenses 410, 411, 413 and 415 along with the beam steering optical device 412 are in a Fourier configuration between the first and second programmable deflection planes. For example, the lenses 410, 411, 413 and 415 may have no optical power in the axis orthogonal to the dispersion axis, whilst the beam steering optical device 412 has optical power in the axis orthogonal to the dispersion axis that is equal to its distance from the first and second programmable deflection planes. In this example, the beam steering optical device 412 may be implemented as a compound lens formed of two cylindrical lenses.

Suitably, the focal length of lenses 410 and 411 is the same as the focal length of lenses 413 and 415.

Each of the optical elements in the beam steering optical element group has optical power.

The second programmable deflection plane 414 deflects the light incident on it such that it is deviated in a common direction. Thus, the second programmable deflection plane 414 applies a programmable deflection to each spatially separated component frequency channel beam of the array of beams incident on it to form a spatially separated output array of beams. The deflection applied by the second programmable deflection plane 414 is reconfigurable. Thus, a controller providing a control signal to the second programmable deflection plane 414 may change the deflection applied by the second programmable deflection plane 414 to each beam from the beam steering optical element group 409 so as to output the desired channels to the desired ports.

Lenses 417 and 418 are positioned in a 4F arrangement between the second programmable deflection plane 414 and the output ports 402. A diffraction grating 405b is positioned in the Fourier plane between lenses 417 and 418. The spatially separated output array of beams deflected by the second programmable deflection plane 414 passes through the lenses 417 and 418 and diffraction grating 405b. Diffraction grating 405b recombines the spatially separated output array of beams for output from the switch. Thus, the diffraction grating 405b acts to multiplex the spectra to form a multiplexed array of beams for output from the switch 400. The multiplexed signals are routed to the lens array 419 by the lenses 417 and 418. The lens array 419 couples the multiplexed signals to the output ports 402.

Suitably, the diffraction grating 405a and the diffraction grating 405b have the same order. Suitably, the dispersion direction in the dispersion plane of the diffraction grating 405b is the same sign as the dispersion direction in the dispersion plane of the diffraction grating 405a.

The diffraction grating 405b may be the same as the diffraction grating 405a. The diffraction grating 405b may be different to the diffraction grating 405a.

In the example of figure 4, the incidence normal of the first programmable deflection plane 408 is in the same direction as the incidence normal of the second programmable deflection plane 414. This is because the first and second programmable deflection planes are coplanar. The first and second programmable deflection planes are located on the same single planar SLM device. In figure 4 an odd number of separated optical elements in the beam steering optical element group 409 (in this case five) is used in order for a Fourier conjugate image of the first programmable deflection plane 408 to be formed on the second programmable deflection plane 414 in a direction orthogonal to the dispersion plane.

Whilst also odd numbers of separated optical elements, one or three separated optical elements are insufficient to control the frequency channels from the second programmable deflection plane 414 to be multiplexed into the desired target output ports 402 when the first and second programmable deflection planes are coplanar. Specifically, with one or three separated optical elements in the optical path between the first and second programmable deflection planes, the spectra imaged on the second programmable deflection plane will be inverted (i.e. back to front) compared to the spectra on the first programmable deflection plane. In other words, moving from one side of the first programmable deflection plane to the other the spectra are dispersed from high to low wavelengths, whereas moving in the same direction from one side of the second programmable deflection plane to the other the spectra are dispersed from low to high wavelengths.

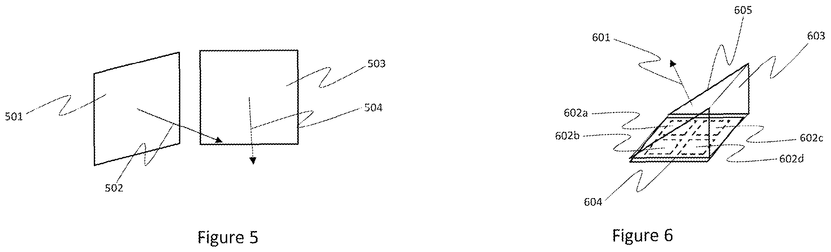

This issue applies unless the first and second programmable deflection planes are facing each other. In the example of figure 4, the first and second programmable deflection planes may be incorporated on the same planar SLM device, thus the first and second programmable deflection planes are coplanar. This issue applies to programmable deflection planes on the same SLM device, and also programmable deflection planes on separate but coplanar SLM devices. It also applies to SLM devices which require the light to be retroreflected. The issue applies more generally where the incidence normal of the first programmable deflection plane is within the same hemispherical angular area as the incidence normal of the second programmable deflection plane. Figure 5 illustrates an example in which a first programmable deflection plane 501 with incidence normal 502 is at an angle to a second programmable deflection plane 503 with incidence normal 504. Although not coplanar, the incidence normal 502 and 504 are within the same hemispherical angular area.

Figure 5 illustrates the incidence normals 502 and 504 of the physical planes in which the deflection planes are positioned. Where local optics are used to project the location of the deflection plane onto another virtual plane, then the incidence normal is that of the virtual plane. For example, figure 6 illustrates the direction of the incidence normal 601 of each of four programmable deflection planes 602a, 602b, 602c, 602d which are relocated virtually by means of prism 603. For packaging purposes, SLM planes may usefully be located on a base plate 604 of an optical switch. Local optics, such as prism(s) or mirror(s) are then used to relocate the programmable deflection planes to virtual locations in the optical switch as desired, in the case of figure 6, plane 605.

Utilising an odd number of at least five optical elements in a Fourier configuration in the beam steering optical element group between the two programmable deflection planes ensures that a non-inverted image in the dispersion plane and Fourier conjugate orthogonal to the dispersion plane image of the first programmable deflection plane is formed on the second programmable deflection plane when the incidence normal of the first and second programmable deflection planes are within the same hemispherical angular area.

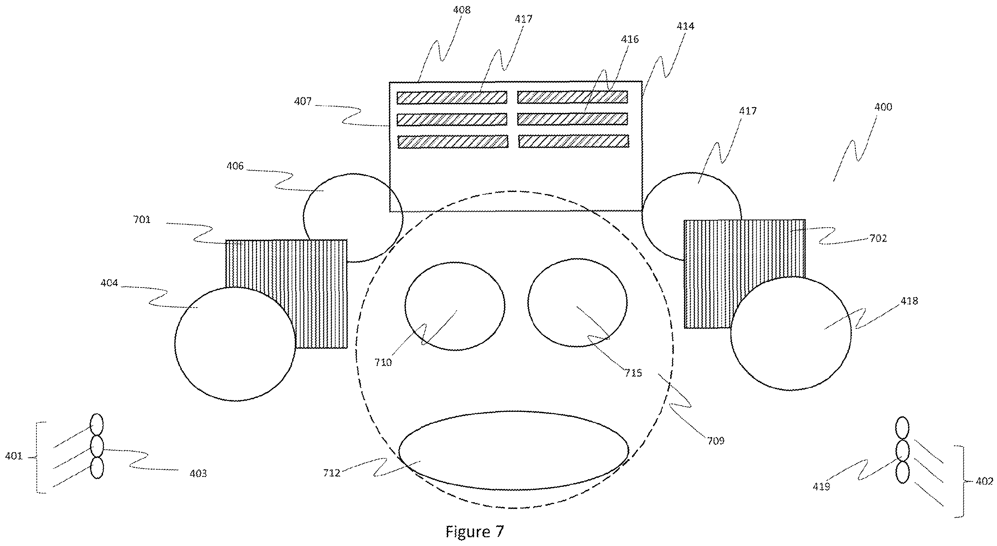

Alternatively, an odd number of fewer than five (such as three) optical elements in the beam steering optical element group may be used in combination with diffraction gratings which are of opposing grating order. Figure 7 illustrates such an example. The features of figure 7 which are the same as those of figure 4 and operate in the same manner are illustrated with the same reference numerals. The detail of those features is as described above with respect to figure 4. The structure and operation of the MxN WSS of figure 7 differs from the description of the MxN WSS of figure 4 above by the following details.

As with figure 4, the beam steering optical element group 709 transfers the deflected array of beams from the first programmable deflection plane 408 onto the second programmable deflection plane 414. However, the beam steering optical element group 709 of figure 7 comprises three optical elements: lenses 710 and 715 and beam steering optical device 712. Lens 710 diverts the deflected array of beams from the first programmable deflection plane 408 towards the beam steering optical device 712. The lens 710 images the deflected spectra 417 onto the beam steering optical device 712 in the dispersion plane. Lens 710 is positioned such that the spectra 417 and beam steering optical device 712 are in Fourier planes. Suitably, lens 710 only has optical power in the dispersion plane. Suitably, orthogonal to the dispersion plane, lens 710 has no optical power.

The beam steering optical device 712 redirects the diverted deflected array of beams towards the second programmable deflection plane 414. Suitably, the beam steering optical device 712 has no optical power in the dispersion plane. Suitably, the beam steering optical device 712 only has power orthogonal to the dispersion plane. Suitably, the beam steering optical device 712 is in a Fourier configuration with the first and second programmable deflection planes orthogonal to the dispersion axis. In other words, the focal length of the beam steering optical device 712 is equal to the distance between the beam steering optical device 712 and the first and second programmable deflection planes. The beam steering optical device 712 may be, for example, a curved mirror.

Lens 715 diverts the redirected array of beams from the beam steering optical device 712 towards the second programmable deflection plane. Suitably, lens 715 only has optical power in the dispersion plane. Suitably, orthogonal to the dispersion plane, lens 715 has no optical power.

Each of the optical elements in the beam steering optical element group 709 has optical power.

The beam steering optical element group 709 forms an inverted image of the first programmable deflection plane on the second programmable deflection plane. The beam steering optical element group 709 forms a Fourier conjugate image of the first programmable deflection plane on the second programmable deflection plane in a direction orthogonal to the dispersion plane.

Diffraction grating 701 demultiplexes the signal from the input ports 401 as described with respect to figure 4. Diffraction grating 702 multiplexes the spectra deflected from the second programmable deflection plane 414 to the output ports 402 as described with respect to figure 4. However, the dispersion direction in the dispersion plane of the diffraction grating 701 is of the opposite sign to the dispersion direction in the dispersion plane of the diffraction grating 702. This enables the inverted spectra on the second programmable deflection plane to be inverted again as they are combined at diffraction grating 702 such that the resulting combined signals are correctly matched to the output ports 402. For example, diffraction grating 701 may have order +1 and diffraction grating 702 may have order -1. Alternatively, diffraction grating 701 may have order -1 and diffraction grating 702 may have order +1. Alternatively, diffraction grating 701 may have order +2 and diffraction grating 702 may have order -2. Alternatively, diffraction grating 701 may have order -2 and diffraction grating 702 may have order +2. Suitably, the diffraction gratings 701 and 702 have the same magnitude of order, for example both 1 or both 2. Alternatively, the diffraction gratings 701 and 702 may have different magnitudes of order, for example one 1 and the other 2. Since the diffraction gratings 701 and 702 have opposing signs, they are different diffraction gratings. In other words, the same diffraction grating is not used for both diffraction grating 701 and diffraction grating 702. Utilising two diffraction gratings along with any supporting optics increases the size and weight of the optical switch and the manufacturing cost. Additionally, tolerance issues may occur due to differences in the operation of the diffraction gratings.

Figures 4 and 7 illustrate two different examples of optical switches which optically route light from a set of input ports to a set of output ports via two programmable deflection planes. In order to enable this optical routing to occur effectively, the dispersion direction in the dispersion plane of spectra formed on the second programmable deflection plane with respect to the diffraction order of the diffraction grating which multiplexes the spectra from the second programmable deflection plane is such that the multiplexed signals match the set of output ports. The dispersion direction in the dispersion plane of spectra formed on the second programmable deflection plane is determined by the constituent parts of the beam steering optical element group.

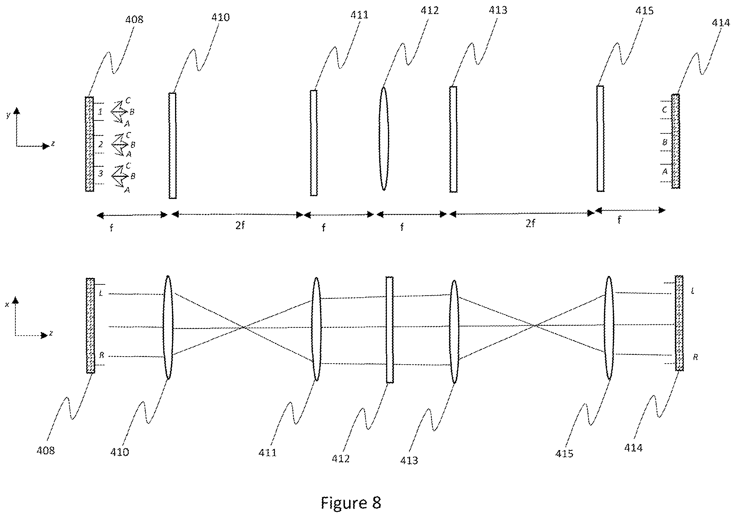

Figure 8 illustrates the detailed optical path of an exemplary beam steering optical element group comprising five optical elements. The upper part of figure 8 illustrates the optical path in the switching plane, i.e. the y axis shown is the switching axis and the z axis is the optical axis. The lower part of figure 8 illustrates the optical path in the dispersion plane, i.e. the x axis shown is the dispersion axis and the z axis is the optical axis. The features of figure 8 which are the same as those of figure 4 and operate in the same manner are illustrated with the same reference numerals.

As discussed with reference to figure 4, the beam steering optical element group redirects light from the first programmable deflection plane 408 to the second programmable deflection plane 414. Four of the five optical elements of the beam steering optical element group have optical power in the dispersion axis. Specifically, lenses 410, 411, 413 and 415 have optical power in the dispersion axis. Suitably, lenses 410, 411, 413 and 415 have optical power only in the dispersion axis. Beam steering optical device 412 is a lens with optical power in the switching axis. Suitably, beam steering optical device 412 has optical power only in the switching axis. Lens 410 is located one focal length from the first programmable deflection plane 408. Lens 411 is located two focal lengths from lens 410 and one focal length from beam steering optical device 412. Beam steering optical device 412 is located one focal length from lens 411 and one focal length from lens 413. Lens 413 is located one focal length from beam steering optical device 412 and two focal lengths from lens 415. Lens 415 is located one focal length from lens 413 and one focal length from the second programmable deflection plane 414. The total optical length from the first programmable deflection plane to the second programmable deflection plane is 8 focal lengths (8f).

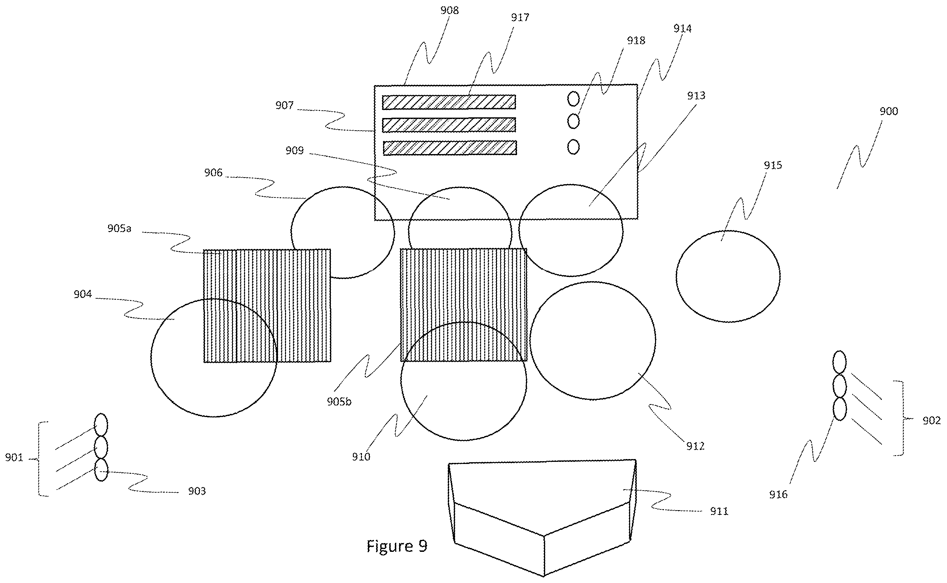

Figure 9 illustrates an exemplary add-drop WSS 900 in which a single panel 907 comprises two programmable deflection planes 908, 914. This single panel may, for example, be an SLM device.

In the adWSS of figure 9, light from a set of N ports 901 is routed to a set of K drop ports 902. Each port may comprise one or more optical fibres. Each port transports an optical signal having at least one component data channel. Typically, each port has a plurality of data channels. Each channel transports data. Each channel has a frequency band which has a different centre frequency to the other channels of that port. The channels of a port may have the same or different bandwidths. The bandwidths of the channels of a port are non-overlapping. Each channel from each input port 901 may be routed to any individual output port 902.

The optical signals from the input ports 901 pass through coupling lenses 903 which form an optical beam of the N ports before a 4F imaging system. There is a coupling lens for each input port. The 4F imaging system comprises two lenses 904 and 906 separated by a diffraction grating 905a at the Fourier plane of lens 904. The diffraction grating 905a spatially separates the component frequency channels of the optical signal beams incident on it to form a set of dispersed optical signal beams. In other words, each optical signal from an input port is spread into its frequency spectrum by the diffraction grating 905a. Thus, the diffraction grating 905a acts to demultiplex each optical signal into its component data channels.

A first programmable deflection plane 908 is positioned in the optical path of the set of dispersed optical signals such that the set of dispersed optical signal beams form spectra 917 on the first programmable deflection plane 908. In the example of figure 9, three input ports 901 are illustrated, each of which forms a spectrum 917 on the first programmable deflection plane 908. Each spectrum forms an array of beams of the component data channels of the input port which are imaged on the first programmable deflection plane 908, each beam being a data channel. The first programmable deflection plane 908 applies a programmable deflection to each beam of the array of beams individually to form a deflected array of beams. The degree of deflection applied to each beam is so as to change the angle of that beam to direct its data channel on a path towards a selected one of the output ports 902. The deflection applied by the first programmable deflection plane 908 is reconfigurable. Thus, a controller providing a control signal to the first programmable deflection plane 908 may change the deflection applied by the first programmable deflection plane 908 to each individual beam of the spectra from each input port, so as to output the desired channels to the desired ports.

The deflected array of beams from the first programmable deflection plane 908 then travels through a lens 909 and diffraction grating 905b in the Fourier plane of lens 909. The diffraction grating 905b may be the same as or different to the diffraction grating 905a. The diffraction grating 905b recombines the deflected spectra for each output port 902. Thus, the diffraction grating 905b acts to multiplex the spectra. An imaging lens 910 images the optical signal from the diffraction grating 905b onto a beam steering optical device 911.

Beam steering optical device 911 is suitably a retroreflecting optic which redirects the optical signal from the imaging lens 910 towards the second programmable deflection plane 914.

The redirected array of beams is then directed through two lenses 912 and 913. Lenses 912 and 913 are in a telescope arrangement, and act to image the light output from the beam steering optical device 911 onto the second programmable deflection plane 914. The telescope arrangement may be so as to magnify the redirected array of beams onto the second programmable deflection plane 914. Since the spectra have been recombined at the diffraction grating 905b, the redirected array of beams in figure 9 are multiplexed light signals. The second programmable deflection plane 914 acts as a column of vertical space switches 918, each of which applies a programmable deflection to each beam of the array of beams incident on it. There are the same number of space switches as there are drop ports, in this case K space switches and K drop ports. The deflection corrects for the angle each input port spectrum makes with the space switch so as to efficiently couple each multiplexed light signal to the selected output port. This ensures a directionless operation. The deflection applied by the second programmable deflection plane 914 is reconfigurable. Thus, a controller providing a control signal to the second programmable deflection plane 914 may change the deflection applied by the second programmable deflection plane 914 to each redirected beam from the beam steering optical device 911 so as to output the desired channels to the desired ports.

The light deflected from the second programmable deflection plane 914 passes through lens 915 creating a single beam at the lens array 916 for coupling to the output ports 902.

The number of angular switching positions in the spectrum channels 917 is equal to the number of output ports K. The number of switching positions in the space switches 918 is equal to the number of input ports N.

Where there are N input ports and K output ports, and K>N, N output ports may be used for direct transit from the N input ports. K-N output ports may then be used as drop ports.

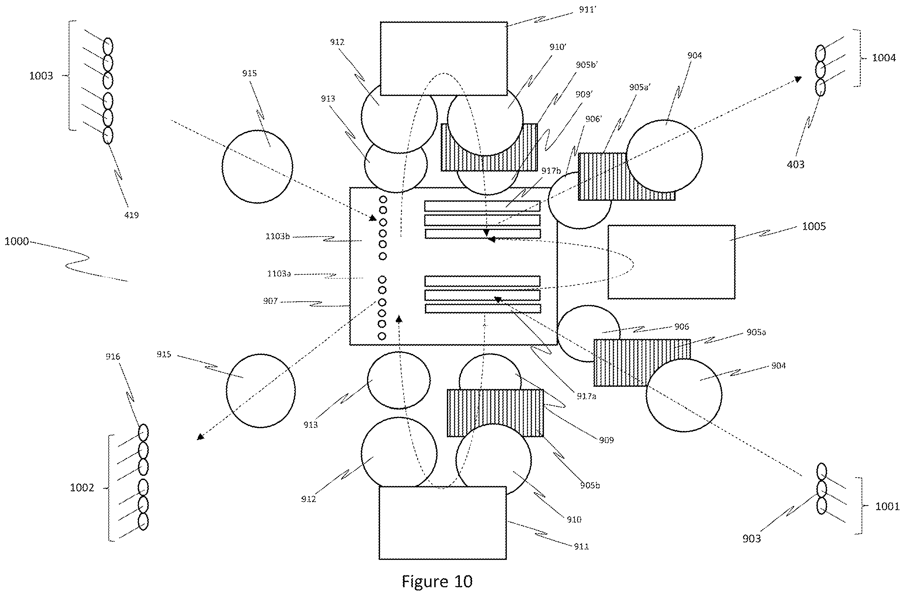

Figure 10 illustrates an example in which two adWSS structures as described above are incorporated into a single switch as an implementation of a two layer edge reconfigurable optical add-drop multiplexer (ROADM) wavelength selective switch. The adWSS structures illustrated in figure 10 are the same as that described with respect to figure 9. However, it is understood that any two of the adWSS architectures described herein may instead be incorporated into the edge ROADM switch. One of the adWSS structures in figure 10 is operated in the forward direction described with respect to figure 9. This adWSS structure has transit input ports 1001 through which light is directed to form spectra 917a on a first programmable deflection plane of panel 907, which are then routed via beam steering optical device 911 to space switches 1103a on a second programmable deflection plane of panel 907, following which the light is output via drop ports 1002. The other adWSS structure in figure 10 is operated in the reverse direction to that described with respect to figure 9. This reverse adWSS structure has add ports 1003 through which light is directed to space switches 1103b on a third programmable deflection plane of panel 907, which are then routed via another beam steering optical device 911' to spectra 917b on a fourth programmable deflection plane of panel 907, following which the light is output via transit output ports 1004. The other optical components of the two adWSS structures are as described with respect to figure 9.

Suitably, a single SLM panel 907 incorporates the first, second, third and fourth programmable deflection planes. That single SLM panel is planar. Thus, the incidence normal of each of the first, second, third and fourth programmable deflection planes is in the same direction. The two beam steering optical devices 911 and 911' are suitably retroreflecting optics.

Figure 10 illustrates the ROADM switch using only a single SLM panel 907. Alternatively, the individual adWSS structures may use separate SLM panels. Each adWSS structure may incorporate both its programmable deflection planes on a single SLM panel. Alternatively, the two programmable deflection planes of each adWSS may be on separate SLM panels. One adWSS may incorporate both its programmable deflection planes on a single SLM panel, whilst the other adWSS may have separate SLM panels for each of its programmable deflection planes. If separate SLM panels are used, the first, second, third and fourth programmable deflection planes may not all be coplanar with each other. However, suitably, all of the programmable deflection planes have incidence normals which are within the same hemispherical angular area. As described with reference to figure 5, the programmable deflection planes may be at an angle to each other. As described with reference to figure 6, local optics may be used to project the location of any one or more deflection plane onto another virtual plane. In this case, the incidence normals to the virtually relocated deflection planes are all within the same hemispherical angular area.

In addition to the two adWSS structures, the edge ROADM switch of figure 10 includes a transit section 1005 which provides an optical path from the first programmable deflection plane to the fourth programmable deflection plane so as to transport an optical signal from a transit input port 1001 to a transit output port 1004. This transit section is an NxN switch which switches from the N spectra 917a on the first programmable deflection plane to the N spectra 917b on the fourth programmable deflection plane.

The transit section 1005 may comprise any of the beam steering optical element groups described herein. The transit section 1005 may comprise a lens and a retroreflecting optic. That retroreflecting optic may be a mirror. The lens and mirror may be used to switch channels between the input spectrum 917a and the output spectrum 917b in the conjugate plane of the lens. In this example, the spectral direction will be reversed due to lateral inversion in a single lens. This can be countered using diffraction grating 905a to reverse the spectral direction relative to diffraction grating 905a'.

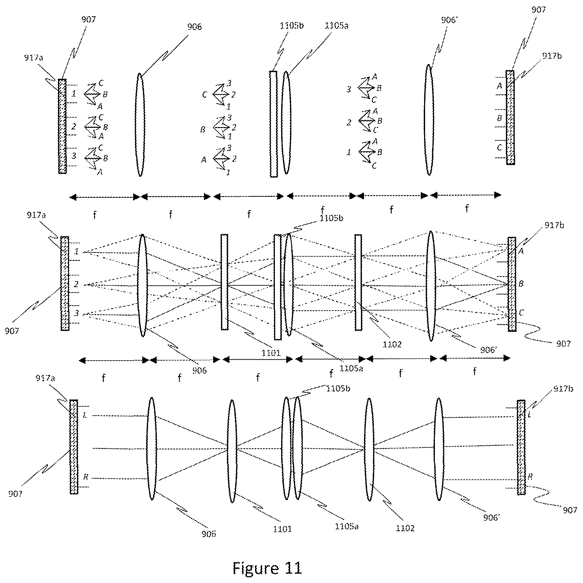

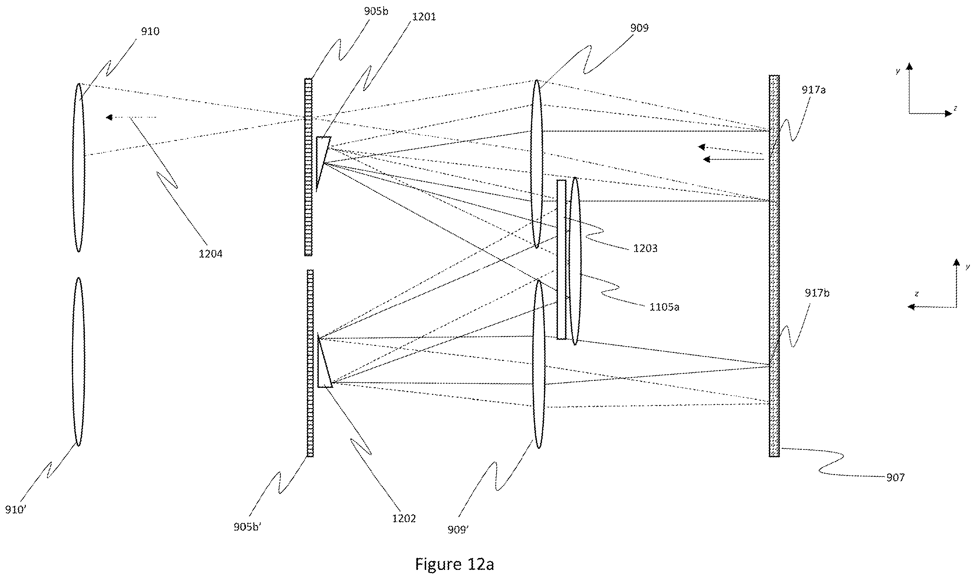

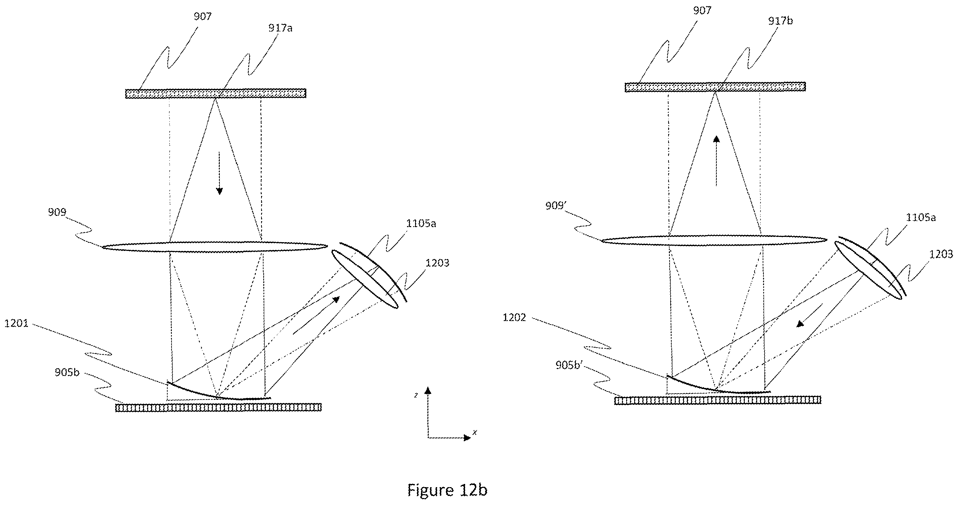

Figure 11 illustrates the optical path of another exemplary transit section of a ROADM switch. The top two sections of figure 11 illustrate the optical path in the switching plane. The bottom section of figure 11 illustrates the optical path in the dispersion plane. The transit section comprises a lens assembly 1105 comprising two lenses 1105a and 1105b positioned in the optical path between lenses 906 of the first adWSS and 906' of the second adWSS. Lenses 1105a and 1105b are spaced two focal lengths of lens 906 from lens 906. Lenses 1105a and 1105b are spaced two focal lengths of lens 906' from lens 906'. Lens 906 is spaced one focal length of lens 906 from spectra 917a on the first programmable deflection plane. Lens 906' is spaced one focal length of lens 906' from spectra 917b on the fourth programmable deflection plane. Lens 1105a is a normal spherical lens. Lens 1105b is a cylindrical lens with power only in its dispersion axis. Lens 1105a may be implemented as a curved mirror in order to reflect light to the output spectral plane 917b, as will be described below in more detail with reference to figure 12.

The transit section of figure 11 also comprises two further lenses 1101 and 1102. Lens 1101 is positioned in the optical path between lenses 1105a,1105b and lens 906. Lens 1101 is one focal length from lens 1105b, 1105a and one focal length from lens 906. Lens 1102 is positioned in the optical path between lenses 1105a,1105b and lens 906'. Lens 1102 is one focal length from lens 1105b, 1105a and one focal length from lens 906'. Lenses 1101 and 1102 are used to prevent lateral inversion of the spectra. Lenses 1101 and 1102 are cylindrical lenses with power only in the dispersion plane.

Figures 12a and 12b illustrate the optical path of another exemplary transit section. Figure 12a illustrates the optical path in the switching plane, and figure 12b illustrates the optical path in the dispersion plane. The spectra 917a on the first programmable deflection plane are deflected through lens 909 towards diffraction grating 905b. A first mirror segment 1201 on the diffraction grating 905b is aligned with the focus points close to the axis. This first mirror segment 1201 diverts the deflected spectra which are incident upon it through cylindrical lens 1203 to curved mirror 1105a. Only some of the deflected spectra from the first programmable deflection plane are incident upon the first mirror segment 1201. The deflected spectra which are incident upon the first mirror segment 1201 are those which are designated to pass through the transit section. The first mirror segment 1201 may be a separate component to the diffraction grating 905b. Alternatively, the first mirror segment 1201 may be integral with the diffraction grating 905b. Cylindrical lens 1203 replaces lens 1105b in the example of figure 11. Cylindrical lens 1203 only has power in the dispersion axis. Cylindrical lens 1203 has half the power of lens 1105b since the light passes through it twice.

The deflected spectra then propagate to a second mirror segment 1202 on the diffraction grating 905b'. Second mirror segment 1202 is aligned with the focus points close to the axis. This second mirror segment 1202 diverts the deflected spectra incident upon it through lens 909' to the output spectra 917b on the fourth programmable deflection plane on SLM panel 907. The deflected spectra are merged with the spectra generated by the light from the add ports 1003 and propagated to the transit output ports 1004.

The first and second mirror segments 1201 and 1202 may be the same but reversed and flat in the switching axis.

Light 1204 that is focussed away from the segment 1201 hits the diffraction grating 905b where it is recombined and propagates through to lens 910 and on to the drop ports 1002 as previously described.

In the ROADM of figure 10, suitably the diffraction grating 905a and the diffraction grating 905b have the same order. Suitably, the dispersion direction in the dispersion plane of the diffraction grating 905b is the same sign as the dispersion direction in the dispersion plane of the diffraction grating 905a. The diffraction grating 905b may be the same as the diffraction grating 905a. The diffraction grating 905b may be different to the diffraction grating 905a.

In the ROADM of figure 10, suitably the diffraction grating 905a' and the diffraction grating 905b' have the same order. Suitably, the dispersion direction in the dispersion plane of the diffraction grating 905b' is the same sign as the dispersion direction in the dispersion plane of the diffraction grating 905a'. The diffraction grating 905b' may be the same as the diffraction grating 905a'. The diffraction grating 905b' may be different to the diffraction grating 905a'.

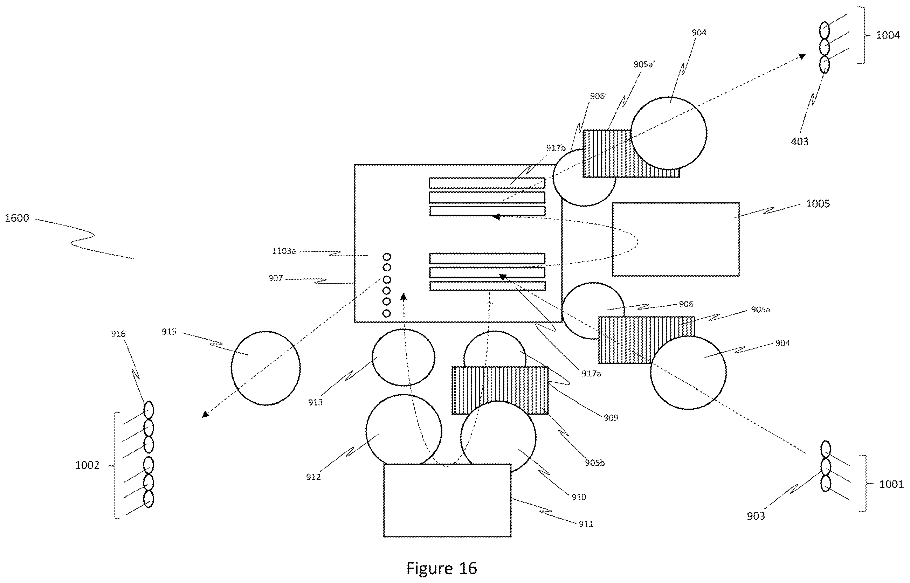

Figure 16 illustrates a further example optical switch 1600 in which a transit section and a single adWSS structure are incorporated into a single switch. The adWSS structure shown in figure 16 is used to drop ports. However, it will be appreciated that the transit section may instead be incorporated into a single switch with an adWSS structure which is used to add ports. In either case, there are only three programmable deflection planes. The operation of the transit section is as described for any of the transit sections above. The operation of the adWSS structure is as described for any of the adWSS structures above. The features of figure 16 which are the same as those of figure 10 and operate in the same manner are illustrated with the same reference numerals. The detail of those features is as described above with respect to figures 10 to 12.

Suitably, a single SLM panel 907 incorporates all three programmable deflection planes of figure 16. That single SLM panel is planar. Thus, the incidence normal of each of the three programmable deflection planes is in the same direction. The beam steering optical device 911 is suitably a retroreflecting optic.

Figure 16 illustrates the optical switch 1600 using only a single SLM panel 907. Alternatively, two or three separate SLM panels may be used. If separate SLM panels are used, those SLM panels may not all be coplanar with each other. However, suitably, all of the programmable deflection planes have incidence normals which are within the same hemispherical angular area. As described with reference to figure 5, the programmable deflection planes may be at an angle to each other. As described with reference to figure 6, local optics may be used to project the location of any one or more deflection plane onto another virtual plane. In this case, the incidence normals to the virtually relocated deflection planes are all within the same hemispherical angular area.

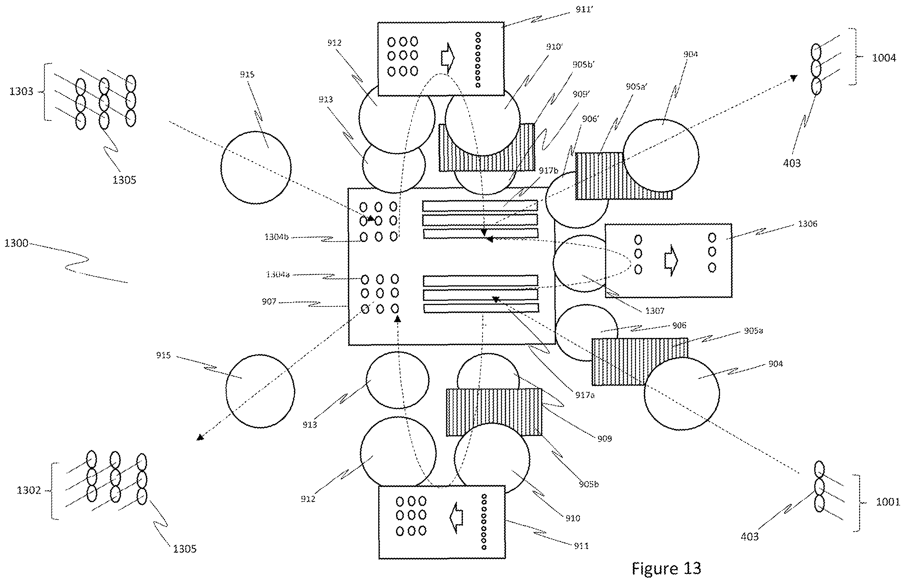

Figure 13 illustrates a further ROADM. The ROADM of figure 13 is very similar to that of figure 10. It differs in the configuration of the add ports and the drop ports. Add ports 1303 and drop ports 1302 are both arranged in a grid. The ROADM of figure 13 also differs from that of figure 10 in that the beam steering optical devices 911 and 911' are remapping optics. Each one remaps the beams incident on it to form a remapped array of beams which it directs to the subsequent programmable deflection plane. In the specific example of figure 13, the beam steering optical device 911 remaps the column array of beams incident on it to a grid array of beams for output to the second programmable deflection plane, where the space switches on the second programmable deflection plane have a corresponding grid array. In the specific example of figure 13, the beam steering optical device 911' remaps the grid array of beams incident on it to a column array of beams for output to the fourth programmable deflection plane, where the spectra on the fourth programmable deflection plane have a corresponding column array. Each beam steering optical device reverses the direction of the light of the beam incident on it. It also shifts the beam path incident on it so that the alignment of the beam path with the space switches or spectra on the subsequent programmable deflection plane is optimised. It does this by independently controlling the spatial positioning and/or orientation of each beam from the deflected array of beams from the first programmable deflection plane in the remapped array of beams. In this way, it changes the spatial positioning and/or orientation of at least one beam from the deflected array of beams differently to at least one other beam of the deflected array of beams. The optical device may be a mirror, mirror array, freeform optic or a retroreflecting prism.

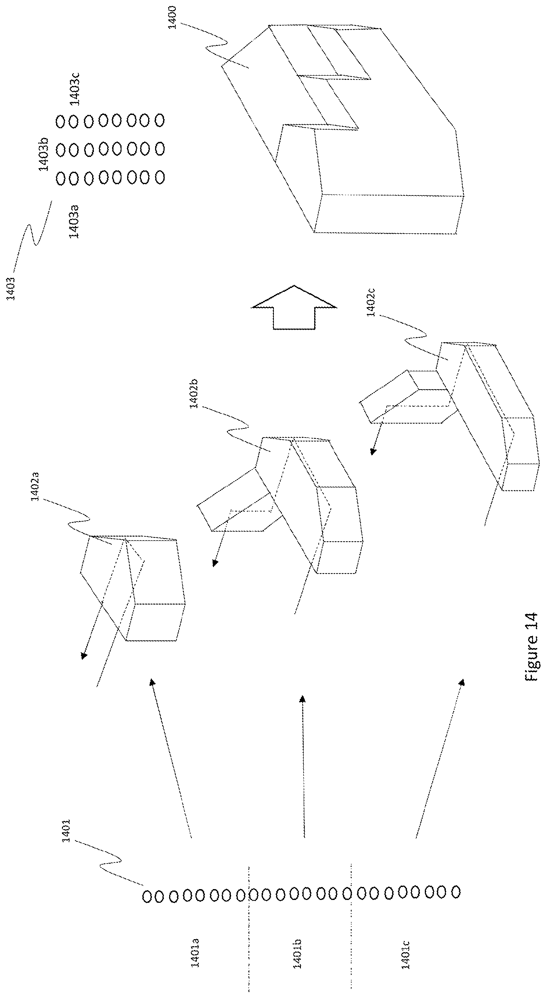

Figure 14 illustrates an implementation of the beam steering optical device 911. The beam steering optical device remaps an array of points incident on it into a different conformal pattern. That different conformal pattern matches the geometrical distribution of the space switches on the second programmable deflection plane and the geometrical distribution of the image of the set of output ports on the second programmable deflection plane. The beam steering optical device of figure 14 is a prism array 1400. The prism array 1400 remaps a single column array of beams to a multiple column array of beams, as shown in figure 13. Referring to figure 13, the single column of spectra 917a are deflected by the first programmable deflection plane 908 and combined by the diffraction grating 905b. They are then imaged by lens 910 to form a set of column points 1401 at the entrance to the prism 1400. Microlenses may optionally be used to collimate the light at the entrance of the prism 1400. The prism array 1400 remaps the column points 1401 to a grid of points 1403.

The prism array 1400 splits the column points 1401 into groups. Figure 14 illustrates three groups 1401a, 1401b, 1401c, however it will be understood that more or fewer groups may be used. Group 1401c is underneath group 1401b which is underneath group 1401a in the single column of points 1401. Each group of points 1401a, 1401b, 1401c is directed to a different retroreflecting structure. Group 1401a is incident on structure 1402a, and exits structure 1402a as group 1403a. Group 1401b is incident on structure 1402b, and exits structure 1402b as group 1403b. Group 1401c is incident on structure 1402c, and exits structure 1402c as group 1403c. Prism structure 1402a causes group 1403a to be displaced to the side relative to group 1401a. Prism structure 1402b incorporates a periscope prism transmission which causes group 1403b to be displaced vertically relative to group 1401b. Prism structure 1402b also causes group 1403b to be displaced to the side relative to group 1401b. Thus, group 1403b is a different column of points to group 1403a which is positioned next to group 1403a. Prism structure 1402c causes group 1403c to be displaced to the side relative to group 1403c. Prism structure 1402c incorporates a periscope prism transmission which causes group 1403c to be displaced vertically relative to group 1401c. Prism structure 1402c also causes group 1403c to be displaced to the side relative to group 1401c. Thus, group 1403c is a different column of points to groups 1403a and 1403b which is positioned next to group 1403b. In this way, the single column of points 1401 is remapped to a twodimensional array of columns 1403.

Prism structures 1402a, 1402b and 1402c are non-overlapping and may be part of a single passive prism element.

If micro lenses are not used, then the optical path through each prism structure for each group is altered such that the total optical path length for each group is the same. This ensures that focussing in the subsequent lens systems 912 and 913 focusses all the beams onto the second programmable deflection plane 914.

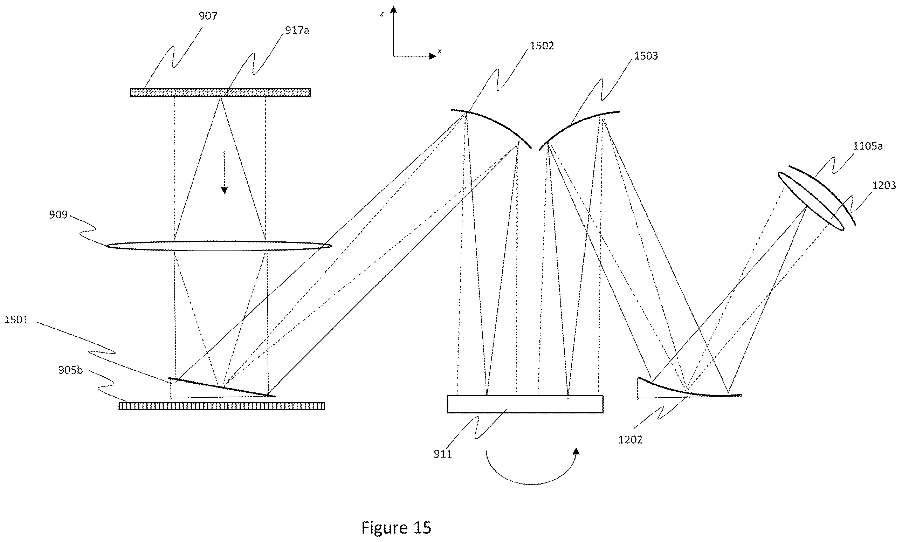

Returning to figure 13, the transit section 1306 may be as described with reference to figures 10, 11 or 12. Alternatively, the transit section may also incorporate a remapping optic. An example of a transit section incorporating a remapping optic is shown in figure 15.

Figure 15 illustrates the optical path of an exemplary transit section which can be used when there is spectral remapping. The transit section of figure 15 enables full access to any channel in any transit port from any transit port without the need for dispersion plane switching on the SLM panel. Figure 15 illustrates the transit section in the dispersion plane. This figure only illustrates the input to transit section of the architecture. The transit section to output is the same as described with reference to figures 12a and 12b.

The spectra 917a on the first programmable deflection plane are deflected through lens 909 towards diffraction grating 905b. A first mirror segment 1501 on the diffraction grating 905b is aligned with the focus points close to the axis. This first mirror segment 1501 is a flat reflector. This first mirror segment 1501 reflects the deflected spectra which are incident upon it to curved mirror 1502. The curved mirror 1502 is the length of its focal length from the first mirror segment 1501. The curved mirror reflects the deflected spectra incident on it to a beam steering optical device 911. The curved mirror 1502 is the length of its focal length from the beam steering optical device 911.

The beam steering optical device 911 remaps the spectra from one geometrical distribution to another as described herein. Specifically, the beam steering optical device 911 orders the spectra into a single vertical column aligned by wavelength. This column is then transmitted to a second spherical mirror 1503. Spherical mirror 1503 focusses the light onto the same second mirror segment 1202 described with respect to figures 12a and 12b. The remainder of the transit section is as described with respect to figures 12a and 12b.

Light that is focussed away from the segment 1501 hits the diffraction grating 905b where it is recombined and propagates through to lens 910 and on to the drop ports 1302 as previously described.

In the transit sections described herein, by avoiding passing the light through the diffraction gratings between the first and fourth programmable deflection planes, contentionless transit switching is achieved and insertion loss is minimised.

The beam steering optical device 911 utilised in the example of figure 15 between the input and output spectral planes on the SLM panel 907 enables the edge ROADM switch to be a full NxN WSS for the direct transit path from the input ports 1001 to the output ports 1004. The add ports 1303 and drop ports 1302 are used with the space switch elements as described above for an adWSS in order to add and drop data from the edge ROADM switch.

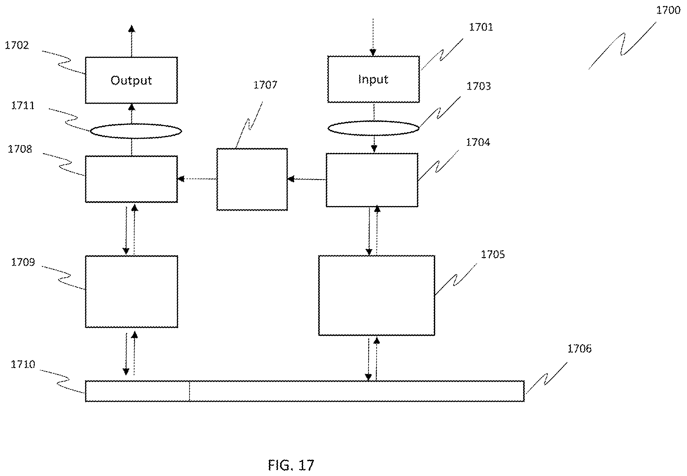

Figure 17 illustrates a further MxN WSS 1700 between input ports 1701 and output ports 1702. Input light beams from N input ports 1701 pass through a fan lens 1703, a mirror optic 1704 and an optical system 1705 before being incident on a first programmable deflection plane 1706. The mirror optic 1704 may be a split aperture mirror (SAM). The SAM may comprise a pair of mirrors separated by a gap. The fan lens 1703 focuses the light input by the input ports 1701 through the gap between the pair of mirrors of the SAM 1704 towards the optical system 1705. In other words, the fan lens focuses the light to a point aligned with the aperture of the SAM. The input light beams then pass through the optical system 1705 towards the first programmable deflection plane 1706.

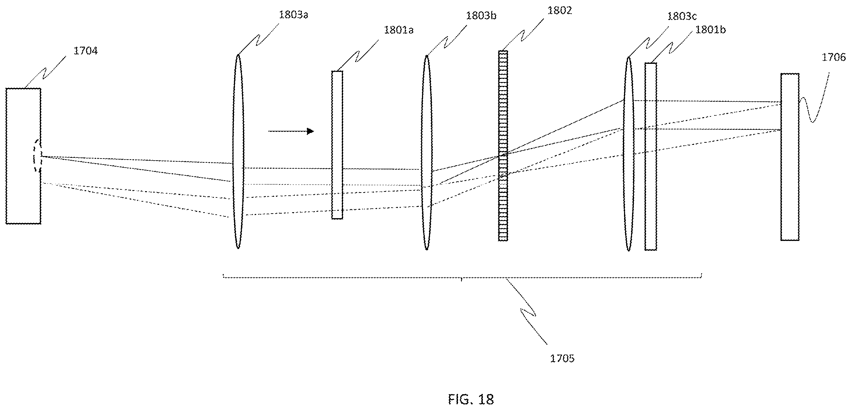

The optical system 1705 comprises a 4F imaging system. The optical system 1705 therefore images the optical signal in the dispersion plane using two lenses which have optical power in the dispersion direction. The optical system 1705 seen in figure 17 also includes a demultiplexer. The demultiplexer is located in the Fourier plane between the two lenses having optical power in the dispersion direction. The demultiplexer is located at the Fourier plane between the two lenses. The demultiplexer in optical system 1705 spreads and collimates the incoming light in the dispersion plane onto the first programmable deflection plane 1706. The incoming light therefore forms spectra on the first programmable deflection plane 1706. The optical system 1705 further includes a lens with optical power in the steering direction located between the two lenses which have optical power in the dispersion direction. In this system, the steering direction is orthogonal to the dispersion direction. The lens may be a Fourier lens. The lens having optical power in the steering direction may be in a Fourier configuration with the first programmable deflection plane 1706 and the mirror optic 1704. The optical system 1705 thus additionally forms a Fourier conjugate in a direction normal to the beam path, along the steering axis. In other words, the optical system 1705 also creates a conjugate Fourier plane in the steering direction. As described, the optical system 1705 may include only a single lens having optical power in the steering direction. Alternatively, the optical system 1705 may take the form seen in figure 18, which includes three lenses having optical power in the steering direction, as described in more detail below. According to further examples, the optical system 1705 may have any odd number of lenses having optical power in the steering direction.

The demultiplexed light incident on the first programmable deflection plane 1706 is deflected in the steering direction and passed back through the optical system 1705 to the mirror optic 1704. Since the demultiplexed light passes back through optical system 1705 in the opposite direction, the demultiplexer acts as a multiplexer in the reverse direction. The demultiplexed light incident on the optical system 1705 is therefore recombined as it passes back through the optical system. Due to the angular deflection imparted on the light by the first programmable deflection plane, once the light has been deflected by the programmable deflection plane 1706 and has passed back through optical system 1705, the deflected multiplexed light is intercepted by one of the mirrors in the pair of mirrors in the SAM 1704. The mirror optic 1704 thus deflects the light in a direction away from input ports 1701.

The deflected light then passes through optical system 1707 and is incident on an optical structure 1708. Optical system 1707 comprises a 4F imaging system. The optical system 1707 comprises two lenses which have optical power in the dispersion direction and image the optical signal in the dispersion plane. The optical system additionally forms a Fourier conjugate in a direction normal to the beam path, along the steering axis. For example, the optical system 1707 further includes a lens having optical power in the steering direction located between the two lenses having optical power in the dispersion direction. The lens may be a Fourier lens. The lens having optical power in the steering direction may be in a Fourier configuration with the second programmable deflection plane 1710 and the optical structure 1708.

The optical structure 1708 is configured to alter the configuration of the beams incident on it so as to generate a gap between those beams. Optical structure 1708 may be known as a gap optic. The optical structure 1708 may comprise a mirror array positioned such that light beams incident on it are split into a first set of beams and a second set of beams, where the first and second sets of beams exit the structure as two distinct spatially separated groups of beams. In other words, the optical structure 1708 splits the incoming light into two portions of light separated by a gap. The first and second sets of beams output from the optical structure 1708 are parallel and separated from each other by a gap. The mirror optic 1704 previously described may additionally take the form of a gap optic. The light output by the optical structure 1708 is input to optical system 1709. Optical system 1709 may take the same form as optical system 1705 previously described. For example, optical system 1709 may comprise a set of two lenses having optical power in the dispersion direction and a lens configured to product a Fourier conjugate in the steering direction. Light deflected by the first programmable deflection plane 1706 therefore passes through optical system 1705, mirror optic 1704, optical system 1707, optical structure 1708 and optical structure 1709 before it is incident on the second programmable deflection plane 1710. The light incident on the second programmable deflection plane 1710 is multiplexed light. The second programmable deflection plane 1710 is therefore a space switch plane which includes space switch elements configured to deflect the incident multiplexed light. The second programmable deflection plane 1710 angularly deflects the incoming light such that it passes through the gap created in the incoming light by optical structure 1709. The deflected light thus passes through optical system 1709 and the optical structure 1708 without interfering with oncoming light. The deflected light passes through the mirror array of optical structure 1708 undeflected and is distributed to the output ports 1702 by fan lens 1711.

According to other examples, the switch illustrated in figure 17 may comprise a further demultiplexer, for example as part of optical structure 1709, such that spectra are produced on both the first programmable deflection plane 1710 and the second programmable deflection plane 1710. As previously described, the first and second programmable deflection planes 1706, 1710 may be located on separate SLM devices or may be located on a single common SLM device.

As previously mentioned, figure 18 illustrates an example of the optical system 1705 seen in figure 17. As described, the optical system 1705 is positioned between mirror optic 1704 and the first programmable deflection plane 1706. The optical system according to this example comprises two lenses in the dispersion plane 1801a, 1801b. Lenses 1801a, 1801b may be cylindrical lenses with power in the dispersion plane. The optical system 1705 further comprises three lenses having optical power in the steering plane, 1803a, 1803b, 1803c. The lenses 1803a, 1803b, 1803c may be cylindrical lenses having optical power in the steering direction. Lens 1803a is located a distance from mirror optic 1704 equal to the focal length of lens 1803a. Steering lenses 1803b and 1803c are positioned between the two dispersion lenses 1801a and 1801b. Lenses 1801a, 1801b may be in a 4F configuration. In other words, lens 1704 is one focal length from lens 1801a, lens 1706 is one focal length from lens 1801b and lenses 1801a and 1801b are separated by a distance which is equal to the sum of their focal lengths.

The optical system further comprises a demultiplexer 1802. The demultiplexer 1802 may be a diffraction grating. The demultiplexer 1802 is located between the two dispersion lenses 1801a, 1801b. The demultiplexer 1802 may be positioned in the plane that is one respective focal length from lens 1801a and one respective focal length from lens 1801b. The demultiplexer 1802 is in a Fourier conjugate plane in the steering direction to the first programmable deflection plane 1706.

Steering lenses 1803a, 1803b, 1803c form a Fourier conjugate plane in the steering direction. For example, lenses 1803b and 1803c may form a 4F imaging system between the first programmable deflection plane 1706 and a plane which is a distance from lens 1803a equal to the focal length of lens 1803a. The steering lens 1803c may be coincident with dispersion lens 1801b between the demultiplexer 1802 and the first programmable deflection plane 1706. Steering lens 1803b may be coincident with the demultiplexer 1802. According to further examples, lenses 1803c and 1801b are in the same Fourier conjugate relationship with the plane of the demultiplexer 1802 and hence have the same focal length in the steering and dispersion directions. Lenses 1803c and 1801b are positioned at the same location and have the same focal length. Thus in the simplest arrangement, lenses 1803c and 1801b may be replaced by a single lens having optical power in the dispersion direction and in the steering direction. Lenses 1801b and 1803c may be circularly symmetric. Lenses 1801b and 1803c may be a single spherical lens of the same focal length in both direction.

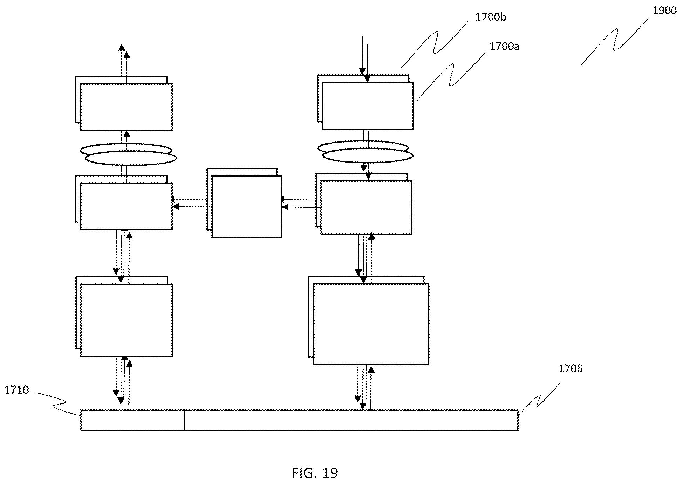

Figure 19 illustrates a further ROADM switch 1900 which is a two-layer edge reconfigurable optical multiplexer (ROADM) wavelength selective switch. The switch 1900 seen in figure 19 is a twin system in a single package formed from two of the MxN WSSs 1700 seen in figure 17. The WSSs (1700a, 1700b) are arranged on top of one another (in the steering direction). The components of the switch 1700 seen in figure 17 and described above are duplicated in the switch 1900 seen in figure 19. The first MxN WSS 1700a comprises a first programmable deflection plane 1706a. The second MxN WSS 1700b comprises a second programmable deflection plane 1706b. The first MxN WSS 1700a comprises a third programmable deflection plane 1710b. The second MxN WSS 1700b comprises a fourth programmable deflection plane 1710a. In the switch 1900 seen in figure 19, the first and second programmable deflection planes 1706a, 1706b are incorporated into a single SLM device 1706. The third and fourth programmable deflection planes 1710b, 1710a are incorporated into a single SLM device 1710. In other examples, the first and second programmable deflection planes 1706a, 1706b may be located on different devices. The third and fourth programmable deflection planes 1710b, 1710a may be located on different devices. According to further examples, all four programmable deflection planes 1706a, 1706b, 1710a, 1710b may be incorporated into a single device. As will be described in more detail in the following examples, in some twin systems, equivalent components in each of the two WSSs are combined into a single component for the twin system. For example, mirror optics 1704a, 1704b may be integrated into a single mirror optic 1704 for the twin system. Each MxN WSS 1700a, 1700b is configured to operate as previously described so as to transfer signals from ports 1701a to ports 1702a, from ports 1701b to 1702b, from ports 1702a to ports 1701a and from ports 1702b to ports 1701b.

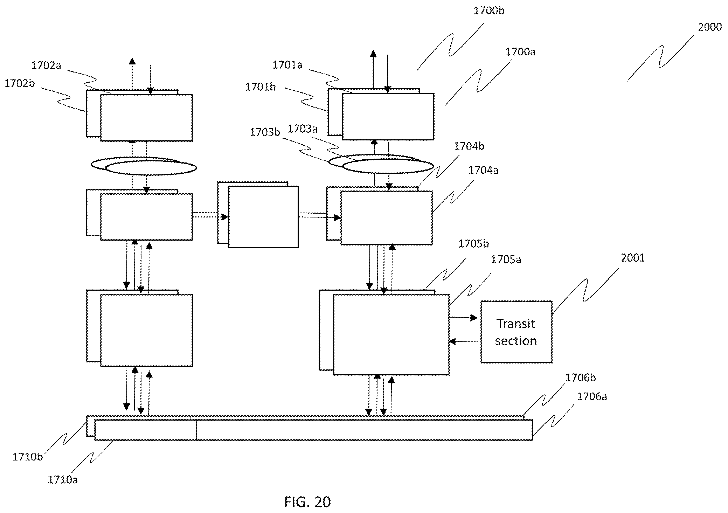

Figure 20 illustrates a further ROADM switch 2000. The structure of the switch 2000 is a twolevel system formed of MxN WSSs 1700a and 1700b having the components seen in figure 19 and described above. Each MxN WSS 1700a, 1700b is configured to operate as previously described so as to transfer signals from ports 1701a to ports 1702a, from ports 1701b to 1702b, from ports 1702a to ports 1701a and from ports 1702b to ports 1701b.

Similarly to the switches seen in figures 10, 13 and 16, the switch 2000 additionally includes a transit section 2001, also referred to as a beam steering optical device, which enables signals to be transferred from one of systems 1700a, 1700b to the other of systems 1700a, 1700b. This transit section is an NxN switch which switches from N spectra on the first programmable deflection plane 1706a of the first WSS 1700a to N spectra on the second programmable deflection plane 1706b of the second WSS 1700b. The transit section can be positioned at any plane that contains a conjugate Fourier image of the spectral plane of the any of the programmable deflection planes focused in the steering direction. In the switch 2000, the transit section 2001 is positioned adjacent to the demultiplexer 1802 of optical systems 1705a, 1705b. The transit section 2001 enables signals to be transferred from ports 1701a (acting as input ports) to ports 1701b (acting as output ports) as indicated by arrows in figure 20, or from ports 1701b (acting as input ports) to ports 1701a (acting as output ports).

According to one example, the optical path of a signal input from input ports 1701a through elements of the WSS 1700a is as follows. The signal passes through fan lens 1703a and through a gap in SAM 1704a to optical system 1705a. The input light beams then pass through the optical system 1705a towards the first programmable deflection plane 1706a. The optical system 1705a in switch 2000 takes the form seen in figure 18. The optical system 1705a also includes a demultiplexer 1802a. As previously described, the optical system 1705a images the optical signal in the dispersion plane using two lenses in a 4F configuration having optical power in the dispersion direction and forms a Fourier conjugate image in the steering direction at the demultiplexer. The demultiplexer in optical system 1705a spreads and collimates the incoming light in the dispersion plane onto the first programmable deflection plane 1706a. As previously explained, the demultiplexer in optical system is located between the two 4F dispersion lenses. As described above, in the optical system 1705a of the type seen in figure 18, lenses 1803c and 1801b may be part of a single spherical lens such that the optical system comprises four lenses and one demultiplexer. The incoming light therefore passes through one lens having optical power in the dispersion direction (1801a), two lenses having optical power in the steering direction (1803a, 1803b), a lens having optical power in both directions (1803c+1801b) and a demultiplexer (1802) before forming spectra on the first programmable deflection plane 1706a. The incoming light passes through a gap 2102a in the demultiplexer (described below) where the light is demultiplexed. The demultiplexed light incident on the first programmable deflection plane 1706a is deflected in the steering direction and is incident again on the spherical lens (1803c+1801b) then the demultiplexer. Specifically, each individual frequency band of the demultiplexed light is deflected in the steering direction by an amount related to the position of the required output ports 1701b.

As previously explained, each MxN WSS 1700a, 1700b includes an optical system 1705a, 1705b, each comprising a demultiplexer 1802a, 1802b positioned between pairs of 4F dispersion lenses. In the present example, demultiplexers 1802a, 1802b are integrated into a common device 1802. According to other examples, the demultiplexers 1802a, 1802b may be present on separate devices.

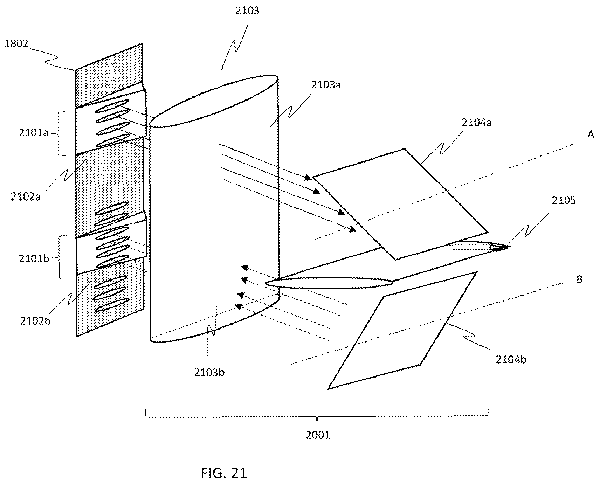

Figure 21 illustrates the demultiplexer 1802 in optical system 1705a and the transit section 2001 in more detail. Figure 21 illustrates that the demultiplexer 1802 includes a plurality of ports. As previously described, the majority of ports of the upper set of ports receive light deflected by the first programmable deflection plane 1706a and re-multiplex the signal before it is passed through the WSS 1700a and propagated through switch 2000 i.e. to mirror optic 1704a and onto output ports 1702a taking a path as described with respect to figure 17. The same is true of the lower set of ports with respect to the WSS 1700b although the signal may be passing through the WSS in the opposite direction (from 1702b to 1701b). The demultiplexer 1802 includes four transit input ports 2101a for sending the received signal to the transit section and four transit output ports 2101b for receiving the signal from the transit section. According to other examples, the demultiplexer may comprise more or fewer transit input ports and/or outport ports. As seen in figure 21, the four transit input ports 2101 are positioned as a group of four next to a gap in the ports 2102a. The same is true of the four transit output ports 2101b and gap 2101b. In the majority of examples, the transit input ports and transit output ports are the ports closest to the respective gap, i.e. the lowest loss ports. According to another example, the transit input ports 2101a may be divided into two pairs by a central gap and the transit output ports 2101b may be divided into two pairs by a central gap. As previously explained, the signal input from input ports 1701a passes through the gap 2102a in demultiplexer 1802 on route to the first programmable deflection plane 1706a. Specifically, it is the case that the incoming signal passes through the gap 2102a where it is split into spectra by the demultiplexer and is incident on the first programmable deflection plane 1706a. Once the demultiplexed light has been angularly deflected by the first programmable deflection plane 1706a and is again incident on the demultiplexer 1802, a portion of the deflected demultiplexed light is incident on the transit input ports 2101. The other portion of the light is incident on others of the ports and propagates through the WSS 1700a as previously described. For the portion of the light incident at the transit input ports 2101a, mirrors located at the transit input ports 2101a deflect the incoming light towards the transit section 2001. The mirrors located at the transit input ports 2101a may be at an angle to the surface of the demultiplexer 1802 but this is not required. The mirrors may be flush with the demultiplexer.

The transit section 2001 may comprise any of the beam steering optical element devices described herein. The transit section 2001 may comprise a lens and a retroreflecting optic. That retroreflecting optic may be a mirror. The transit section 2001 seen in figure 21 includes two cylindrical lenses 2103a, 2103b having optical power in the dispersion direction. The two lenses 2103a, 2103b may be identical lenses or different lenses. In the example seen in figure 21, the two lenses are identical and are made into a single extended cylindrical dispersion lens 2103 through which both the input and output signal pass. The lens 2103 may be located a distance of a single focal length from the transit input ports 2101a and transit output ports 2101b. The transit section 2001 further includes a pair of reflecting mirrors 2104a, 2104b. The first reflecting mirror 2104a reflects light from the normal to the mirror at the top transit input port 2101 to the normal to the mirror at the bottom transit output mirror. A lens 2105 having power in the steering direction is positioned between the two reflecting mirrors 2104a, 2104b in the steering direction. As seen in figure 21, the lens 2105 is mounted horizontally between the mirrors 2104a and 2104b. The lens 2105 is positioned optically equidistant from the reflecting mirror 2104a and from the reflecting mirror 2104b. The Fourier conjugate lens 2105 has a focal length equal to the optical distance of the beam path between the lens 2105 and the transit input ports 2101a and between the lens 2105 and the transit output ports 2101b. The focal length of lens 2105 may be chosen so that the beam waist in the steering direction is the same at the transit input ports 2101a as at the transit output ports 2101b. The focal length of each of the cylindrical dispersion lenses 2103a, 2103b may be half the length of the focal length of the Fourier conjugate lens 2105. The reflecting mirrors 2104a, 2104b in the example seen in figure 21 are orthogonal to one another and rotated relative to one another about axes A and B seen in figure 21 which are both normal to the optical axis and parallel to the plane of the demultiplexer. Positioning mirrors 2104a, 2104b orthogonally with respect to each other introduces a 180 degree rotation of the optical signal. A rotation by this amount is not undesirable as when the signal has a vertical column configuration, the vertical column configuration remains after reflection by mirrors 2104a, 2104b. According to further examples, the mirrors 2104a, 2104b are not perfectly orthogonal. This arrangement may allow for more control of the positions of the transit input ports 2101a and transit output ports 2101b.

Upon leaving the transit section 2001, the signal is incident on the transit output ports 2101b of demultiplexer 1802. Mirrors located at the transit output ports 2101b deflect the light towards the second programmable deflection plane 1706b via spherical lens (1803c+1801b) of optical system 1705b. The mirrors located at the transit output ports 2101b may be at an angle to the surface of the demultiplexer 1802 but this is not required. The mirrors may be flush with the demultiplexer. The optical system 1705b has the form seen in figure 18. The second programmable deflection plane 1706b corrects the angle of the incoming signal and deflects the signal back towards the optical system 1705b. In other words, the light is directed back through the demultiplexer 1802 which, in the opposite direction, acts as a multiplexer. The deflected signal passes through the gap 2102b where it is recombined by the multiplexer 1802. The re-multiplexed signal then passes though a gap in mirror optic 1704b and through fan lens 1703b towards the output ports 1701b.

In summary, for ROADM switch 2000, the optical path between the first programmable deflection plane 1706a of the first MxN WSS 1700a and the second programmable deflection plane 1706b of the second MxN WSS 1700b involves passing spherical lens (1803c+1801b) (of optical system 1705a), being reflected by a mirror at the transit input ports 2101a of demultiplexer 1802, passing through cylindrical lens 2103a, being reflected by mirror 2104a, passing through lens 2105, being reflected by mirror 2104b, passing through cylindrical lens 2103b, being reflected by a mirror at the transit output ports of 2101b of demultiplexer 1802 and passing through spherical lens (1803c+1801b) (of optical system 1705b) before being incident on the second programmable deflection plane 1706b. For optical signals entering the switch 2000, the optical path between the first programmable deflection plane 1706a of the first MxN WSS 1700a and the second programmable deflection plane 1706b of the second MxN WSS 1700b therefore features five elements having optical power. The five elements in the example seen in figure 20 are the two spherical lenses (1803c+1801b) (of 1705a and 1705b) and the two cylindrical dispersion lenses 2103a, 2103b and the Fourier conjugate lens 2105 of the transit section 2001. Light input to the switch via input ports 1701a passes twice through the multiplexer 1802 before it is output to ports 1701b. In other words, the light is demultiplexed once and re-multiplexed once. Furthermore, as described, demultiplexed light is passed through the transit section 2001.

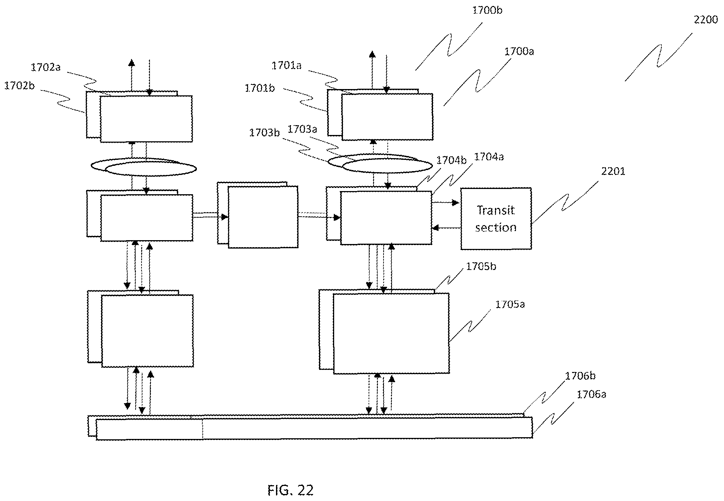

Figure 22 illustrates a further ROADM switch 2200. The structure of the switch 2200 is the same as that of switch 2000 previously described (and shown in figure 20) except for the location of the transit section 2201. In contrast to the switch 2200 in which the transit section 2001 is positioned adjacent to the demultiplexer 1802 of optical systems 1705, 1705, in the switch 2200, the transit section 2201 is located adjacent to the mirror optics 1704a, 1704b.

Each MxN WSS 1700a, 1700b is configured to operate as previously described so as to transfer signals from ports 1701a to ports 1702a, from ports 1701b to 1702b, from ports 1702a to ports 1701a and from ports 1702b to ports 1701b. In addition, the switch 2200 includes transit section 2201 which enables signals to be transferred from one of systems 1700a, 1700b to the other of systems 1700a, 1700b. The transit section 2001 enables signals to be transferred from ports 1701a (acting as input ports) to ports 1701b (acting as output ports) as indicated by arrows in figure 22, or from ports 1701b (acting as input ports) to ports 1701a (acting as output ports).

According to one example, the optical path of a signal input from input ports 1701a passes through elements of the WSS 1700a as follows. The signal passes through fan lens 1703a and through a gap 2302a in mirror optic 1704a to optical system 1705a. As previously described, the mirror optic 1704a may comprise a pair of mirrors separated by a gap. The input light beams then pass through the optical system 1705a towards the first programmable deflection plane 1706. As previously described the optical system 1705a images the optical signal in the dispersion plane using two lenses in a 4F configuration both having optical power in the dispersion direction. The optical system 1705a further includes a lens with optical power in the steering direction located between the two lenses which have optical power in the dispersion direction. The optical system 1705a also includes a demultiplexer 1802a. The demultiplexer in optical system 1705a spreads and collimates the incoming light in the dispersion plane onto the first programmable deflection plane 1706a. As previously explained, the demultiplexer in optical system is located between the two lenses having optical power in the dispersion direction. The demultiplexer is located at the Fourier plane between the two lenses. The optical system 1705a in switch 2200 requires only one lens having optical power in the steering direction.

The incoming light therefore passes through two lenses having optical power in the dispersion direction and one lens having optical power in the steering direction before forming spectra on the first programmable deflection plane 1706a. The demultiplexed light incident on the first programmable deflection plane 1706a is deflected in the steering direction as required for each frequency and passed back through the optical system 1705a to the mirror optic 1704a. Since the demultiplexed light passes back through optical system 1705a in the opposite direction, the demultiplexer acts as a multiplexer in the reverse direction. The demultiplexed light incident on the optical system 1705a is therefore recombined as it passes back through the demultiplexer 1802.

As previously explained, each MxN WSS 1700a, 1700b includes a mirror optic 1704a, 1704b. In the present example, mirror optics 1704a, 1704b are integrated into a common mirror optic 1704. According to other examples, the mirror optics 1704a, 1704b may be present on separate devices.

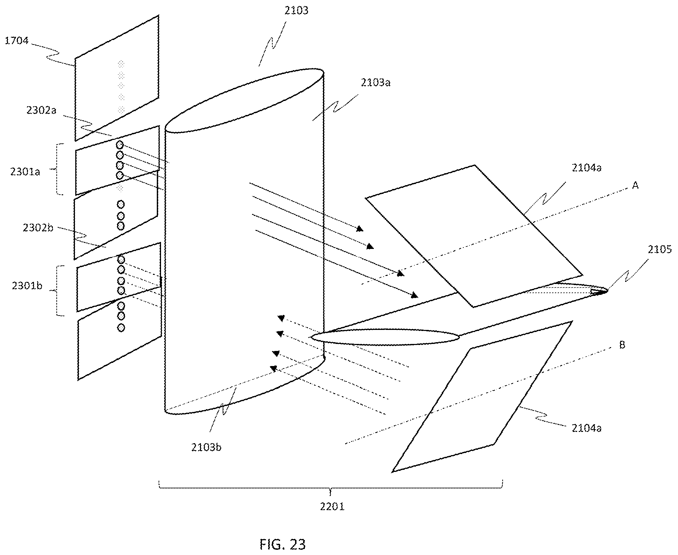

Figure 23 illustrates the mirror optic 1704 and the transit section 2201 of switch 2200 in more detail. The mirror optic 1704 takes the form of a split aperture mirror featuring two gaps 2302a, 2302b. A first angled mirror is situated adjacent to the first gap 2302a. A second angled mirror is situated adjacent to the second gap 2302b. The mirror optic 1704 includes four transit input ports 2301a and four transit output ports 2301b. As seen in figure 23, the four transit input ports 2301a are located on the first angled mirror and are located on one side of the first gap 2302a. The four transit output ports 2301b are located on the second angled mirror and are located on one side of the second gap 2302b. According to another example, the transit input ports 2301a may be divided into two pairs by a central gap and the transit output ports 2301b may be divided into two pairs by a central gap. According to other examples, the mirror optic may comprise fewer or more transit input ports and/or output ports.

As previously explained, the signal input from input ports 1701a passes through the mirror optic 1704a on route to the first programmable deflection plane 1706a. Specifically, it is the case that the incoming signal passes through the first gap 2302a and is passed to optical system 1705a. As previously described, the optical system 1705a includes a demultiplexer 1802a configured to split the incoming multiplexed signal into spectra which are incident on the first programmable deflection plane 1706a. In contrast to the arrangement described in figure 20, in the system 2200 seen in figure 22, once the demultiplexed light has been deflected by the first programmable deflection plane 1706a, it is passed back through the entirety of optical system 1705a and so is re-multiplexed by the demultiplexer 1802a, which acts as a multiplexer. The deflected multiplexed light is then passed back to the mirror optic 1704a. At this stage, due to the transformation imparted on the deflected signal by the first programmable deflection plane 1706a, the deflected light does not pass through the central gap of the mirror optic but instead is intercepted by one of the ports illustrated in figure 23. A portion of the deflected re-multiplexed light is incident of the four transit input ports 2301a. The mirror located at the transit input ports 2301a deflects the incoming light towards the transit section 2201.

The transit section 2201 may take the same form as transit section 2001 seen in figure 21. For example, the transit section 2201 seen in figure 23 includes two cylindrical dispersion lenses 2103a, 2103b made into a single extended cylindrical dispersion lens 2103, a pair of reflecting mirrors 2104a, 2104b and a lens 2105 having power in the steering direction positioned between the two reflecting mirrors 2104a, 2104b.

In contrast to the arrangement seen in figure 20, in the switch 2200, multiplexed light is incident on the mirror optic 1704 and the transit section 2201. The transit input ports 2301a and transit output ports 2301b therefore take the form of space switch elements. Since the transit section is only required to deal with multiplexed beams with smaller beam sizes, the optics included in the transit section 2201 may be simplified with respect to the transit section 2001.

Positioning the transit section adjacent to the mirror optics 1704a, 1704b as opposed to adjacent to the demultiplexer has a number of advantages. As explained above, the signal passing through the transit section is multiplexed, so the size of each component in the transit section 2201 can be reduced with respect to transit section 2001. Furthermore, the tolerances of the transit section may be improved as spectra do not need to be dealt with.

Upon leaving the transit section 2201, the signal is incident on the transit output ports 2301b at the mirror optic 1704. The second angled mirror located at the transit output port 2301b deflects the light towards the second programmable deflection plane 1706b of the second MxN WSS 1700b through the optical system 1705b. The signal therefore passes again through a demultiplexer, this time of the optical system 1705b of second MxN WSS 1700b. A demultiplexed signal is therefore incident on the second programmable deflection plane 1706b which corrects the angle of the incoming signal and deflects the signal back through the optical system 1705b. The light is deflected back through the demultiplexer which, in the opposite direction, acts as a multiplexer. At the mirror optic 1704, the deflected re-multiplexed signal passes through the second gap 2302b adjacent the transit output ports 2301b. The re-multiplexed signal then passes through fan lens 1703b towards the output ports 1701b.

In summary, for ROADM switch 2200, the optical path between the first programmable deflection plane 1706a and the second programmable deflection plane 1706b involves passing through two lenses having optical power in the dispersion direction, one lens having optical power in the steering direction and a demultiplexer (as part of optical system 1705a), being reflected by a mirror at the transit input ports 2301a of mirror optic 1704, passing through cylindrical lens 2103a, being reflected by mirror 2104a, passing through lens 2105, being reflected by mirror 2104b, passing through cylindrical lens 2103b, being reflected by a mirror at the transit output ports 2301b of mirror optic 1704 and again passing through two lenses having optical power in the dispersion direction, at least one lens having optical power in the steering direction and a demultiplexer (as part of optical system 1705b) before being incident on the second programmable deflection plane 1706b. For optical signals entering the switch 2200, the optical path between the first programmable deflection plane 1706a of the first MxN WSS 1700a and the second programmable deflection plane 1706b of the second MxN WSS 1700b features nine elements having optical power. The nine elements in the example seen in figure 22 are the (cumulative) four lenses having optical power in the dispersion direction and two lenses having optical power in the steering direction of optical systems 1705a, 1705b, the two cylindrical dispersion lenses 2103a, 2103b of the transit section 2001 and the lens 2105 of the transit section 2001. The increase in the number of optical components the signal passes through when compared with the switch 2000 results in increased losses in the optical path between ports 1701a and 1701b. Light input to the switch 2200 via input ports 1701a passes four times through a de-multiplexer 1802a, 1802b before it is output at ports 1701b. In other words, the light is demultiplexed twice and re-multiplexed twice. As described, multiplexed light is passed through the transit section 2201. In contrast to the two passes through the demultiplexer in switch 2000, in switch 2200, the signal passes through the demultiplexer four times which can introduce increased loss due to the higher losses associated with the demultiplexers relative to other optical components in the switch.

According to one variation of switch 2200, optical systems 1705a, 1705b take the form seen in figure 18 and previously described as comprising one lens having optical power in the dispersion direction (1801a), two lenses having optical power in the steering direction (1803a, 1803b), a lens having optical power in both directions (1803c+1801b) and a demultiplexer (1802). According to this example, the optical path between the first programmable deflection plane 1706a of the first MxN WSS 1700a and the second programmable deflection plane 1706b of the second MxN WSS 1700b features thirteen elements having optical power.

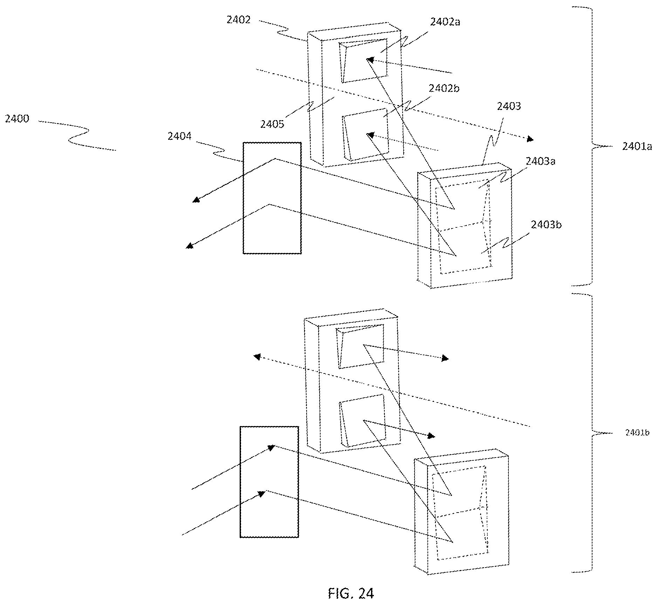

According to a further example of a switch in which the transit section is located adjacent the mirror optics 1704a, 1704b, the combined mirror optic 1704 may take the form of a gap optic configured to alter the configuration of the beams incident on it so as to generate or remove a gap between those beams. Figure 24 illustrates gap optic 2400 and the path of light beams passing through the gap optic in two opposite directions. As described below, the gap optic 2400 directs incident beams to and from the transit section 2201.

According to other examples, each mirror optic 1704a, 1704b may take the form of a separate gap optic (2400a and 2400b). Gap optics 2400a, 2400b may be separate devices formed of different components or may comprise all or some of the same components.

Gap optic 2400 comprises a mirror array comprising a first array of mirror surfaces 2402 and a second array of mirror surfaces 2403. The first array of mirror surfaces 2402 comprises two mirror surfaces 2402a, 2402b separated by a gap. The first array of mirror surfaces 2402 is spaced apart from the second array of mirror surfaces 2403. The second array of mirror surfaces comprises two mirror surfaces 2403a, 2403b with no gap between them.

Beams incident on the first array of mirror surfaces 2402 from optical system 1705a are deflected onto the second array of mirror surfaces 2403 which removes a gap between the beams. Beams which are reflected by the second array of mirror surfaces 2403 are incident on a directing mirror 2404 which directs the beams to the transit section 2201. Specifically, directing mirror 2404 directs the beams to lens 2103a of the transit section. Mirror surfaces 2402, 2403 and directing mirror 2404 therefore operate together as transit input ports 2401a for sending the received signal to the transit section. The beam path through the transit section 2201 is as previously described. Beams from input ports 1701a which are incident on the gap 2405 between the two mirror surfaces 2401, 2401b, of the first array of mirror surfaces 2401 pass through the gap optic undeflected and continue towards the first programmable deflection plane 1706a.

Beams which have passed through the transit section 2201 are incident on directing mirror 2404. The beams are directed to the second array of mirror surfaces 2403. The second array of mirror surfaces 2403 deflect the beams onto the first array of mirror surfaces 2402 which creates a gap between the beams. The beams are directed by the first array of mirror surfaces 2402 towards optical system 1705b and the second programmable deflection plane 1706b. Mirror surfaces 2402, 2403 and directing mirror 2404 therefore operate together as transit output ports 2401b for receiving the signal from the transit section. Beams from the second programmable deflection plane 1706b which are incident on the gap 2405 between the two mirror surfaces 2401, 2401b, of the first array of mirror surfaces 2401 pass through the gap optic undeflected and continue towards output ports 1701b. The gap optic 2400 may alternatively be implemented as part of a switch and used to direct incident beams to and from a transit section located adjacent the demultiplexer of the switch (as seen in figure 20).

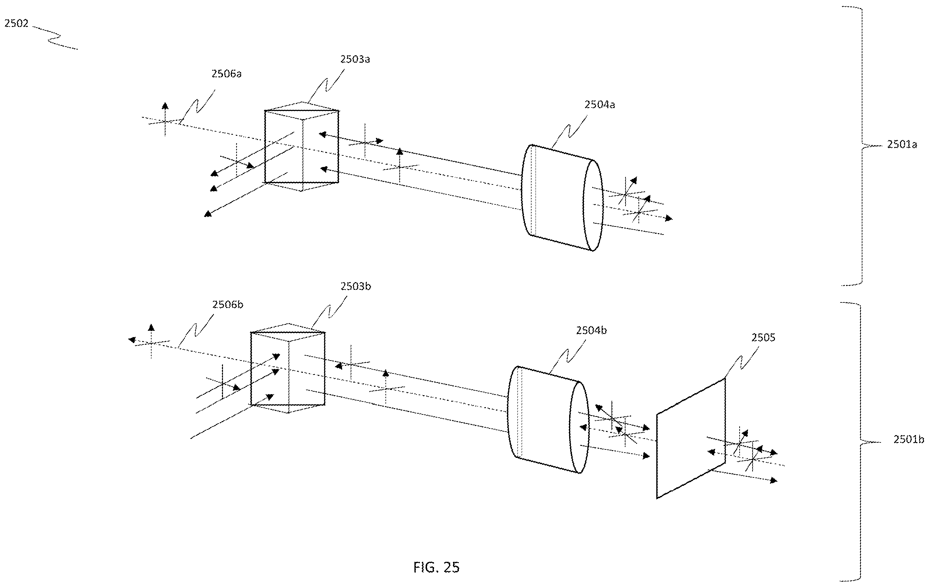

Figure 25 illustrates an alternative optical arrangement 2502 configured to direct light to and receive light from a transit section. The arrangement may be used in conjunction with a transit section located adjacent the mirror optic 1704 or the demultiplexer 1802 as seen in figures 20 and 22. The optical arrangement 2502 may therefore be configured to direct and receive multiplexed or demultiplexed light. The arrangement 2502 comprises a first optical group which operates together as transit input ports 2501a for directing received signals to the transit section (not shown). The arrangement comprises a second optical group which operates together as transit output ports 2501b for receiving the signal from the transit section (not shown).

The first optical group 2501a comprises a polarising beam splitter 2503a and a Faraday rotator 2504a. The polarising beam splitter is configured to transmit light at a first plane of polarisation and reflect light at a second plane of polarisation which is orthogonal to the first plane of polarisation. The polarising beam splitter 2503a is configured to transmit light having a vertical plane of polarisation and reflect light having a horizontal plane of polarisation. Light input from input ports 1701a may have a vertical plane of polarisation so that it is transmitted through the polarising beam splitter 2503a and then passes through the Faraday rotator 2504a on the way to the first programmable deflection plane 1706a (not shown in figure 25). As the light passes through the Faraday rotator, the plane of polarisation of the light is rotated by 45 degrees. Light deflected by the first programmable deflection plane 1706a is passed back through the Faraday rotator 2504a and the plane of polarisation of the light is rotated by another 45 degrees such that the plane of polarisation of the light is now horizontal. Deflected light incident on the polarising beam splitter 2503a is therefore reflected by the polarising beam splitter 2503a towards the transit section. For example, the polarising beam splitter 2503a may direct the light to the lens 2103a of transit section 2201. According to another example, the first optical group may be arranged such that light from the input ports is reflected by the polarising beam splitter on route to the first programmable deflection plane and the light directed to the transit section is transmitted through the polarising beam splitter.

The second optical group 2501b comprises a polarising beam splitter 2503b, a Faraday rotator 2504b and a half wave plate 2505. Light which has passed through the transit section is incident on polarising beam splitter 2503b. Polarising beam splitter 2503b has the same structure as polarising beam splitter 2503. The light received from the transit section having a horizontal plane of polarisation is therefore reflected by the polarising beam splitter 2503b and then passes through the Faraday rotator 2504b. The Faraday rotator 2504b rotates the plane of polarisation of the light by 45 degrees. The light then passes through half wave plate 2505 which aligns the light with the output ports 1701b before the light is incident on the second programmable deflection plane 1706b. Light deflected by the second programmable deflection plane 1706b is passed back through the half wave plate 2505, Faraday rotator 2504b and the plane of polarisation of the light is rotated by another 45 degrees such that the plane of polarisation is now vertical. Deflected light incident on the polarising beam splitter 2503b is therefore transmitted through the polarising beam splitter 2503b towards output ports 1701b as previously described. Alternatively, light input at ports 1702b may not pass through either of the optical groups 2501a, 2501b on route to the ports 1701b such that only light being directed through the transit section interacts with the first and second optical groups 2501a, 2501b. According to the example seen in figure 25, the two Faraday rotators 2504a and 2504b are the same Faraday rotator. According to a different example, the two Faraday rotators 2504a and 2504b are different Faraday rotators, where one of the rotators rotates the beam equally and opposite to the other rotator. In this case, the half wave plate 2505 is not required to be present in optical group 2501b.

As explained with respect to figures 21 and 23, only some of the light incident on the polarising beam splitter 2503a is selected for transit and directed to the transit section. In the examples seen in figures 21 and 23, the respective demultiplexer 1802 and mirror optic 1704 comprise four transit input ports and four transit output ports. According to other examples, each of the demultiplexer and the mirror optic may comprise fewer or more transit input ports and/or output ports. For example, the demultiplexer and/or the mirror optic may include only one transit input port and one transit output port, as explained in more detail below. According to the arrangement 2502 seen in figure 25, the first optical group 2501a may act as only a single transit input port. The second optical group 2501b may act as only a single transit output port. For example, only undeviated light 2506a may be selected for transit. Undeviated light is light which is deflected by the first programmable deflection plane 1706a but has a path through the optical group 2501a which is unaffected by the deflection by the first programmable deflection plane. In other words, the path of undeviated light is the same as it passes through the first optical group 2501a in both directions. According to this example, only undeviated light 2506a is directed to the transit section (and therefore passes to the output ports). This arrangement may be advantageous in situations in which the first programmable deflection plane 1706a and/or the second programmable deflection plane 1706b fail meaning that light is not deflected by the respective programmable deflection plane and only undeviated light is present in the system. In this scenario, light may be still be passed through the transit section and directed from input ports 1701a to output ports 1701b meaning that operation of the ROADM switch can continue even after a fault with the first or second programmable deflection planes.

As discussed, the mirror optic 1704 seen in figure 23 may comprise fewer or more transit input ports and/or output ports. According to the example transit schemes illustrated in figures 21 and 23 and previously described, each transit scheme offers a full NxN switch between each of the N input transit ports and the N output transit ports. In the examples seen in figures 21 and 23, N = 4. According to further examples, instead of a single NxN switch, it is possible to use a number P of LxL switches where P=N/L, where N and L are integers. For each LxL switch, only L input transit ports and L output transit ports are used. This reduction in transit input and output ports leads to less switching in transit and reduced loss.

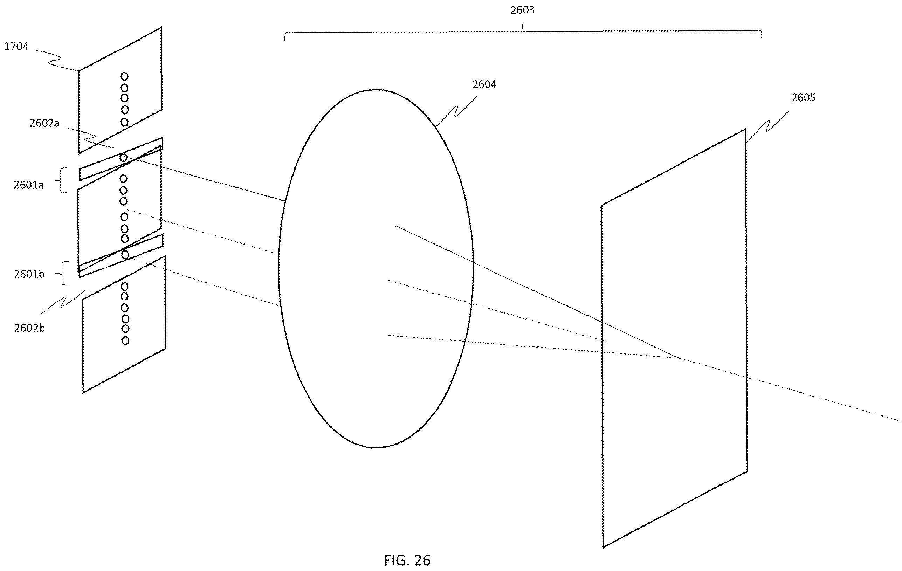

Figure 26 illustrates an example of a mirror optic 1704 and transit section 2603, where the mirror optic comprises only one transit input port 2601a and one transit output port 2601b. The mirror optic 1704 takes the form of a split aperture mirror featuring two gaps 2602a, 2602b. A first angled mirror is situated adjacent to the first gap 2302a. A second angled mirror is situated adjacent to the second gap 2302b. According to other examples, the first and second angled mirrors may be positioned differently with respect to the first and second gaps so long as the mirror 2601b is an inverted image of the location of the mirror 2601a. The mirror optic 1704 includes one transit input port 2601a and one transit output port 2601b. As seen in figure 26, the transit input port 2601a is located on the first angled mirror and located on one side of the first gap 2302a. The transit output port 2601b is located on the second angled mirror and located on one side of the second gap 2302b. In this case, channels selected for transit at the input transit port 2601a are sent directly to the output transit ports 2601b via transit section 2603. There is therefore a direct connection between the input transit port and output transit port without any switching occurring in transit.

In the arrangement seen in figure 26, the transit section consists of a lens 2604 having equal power along the steering axis as along the dispersion axis. For example, lens 2604 may be a spherical lens. The centre of lens 2604 is aligned with an optical axis which is also aligned with a midpoint between the gaps 2602a and 2602b, as seen in figure 26. The transit section further includes a flat mirror 2605 positioned normal to the optical axis. The lens 2604 is located at a distance of one focal length from the mirror 2605 and at a distance of one focal length from a midpoint between gap 2602a and 2602b. The lens 2604 therefore forms an inverted image of the transit input port 2601a (in both the steering and dispersion directions) at the transit output port 2601b. The second angled mirror then deflects the port to the second programmable deflection plane 1706b of the second MxN WSS 1700b as previously described. The mirror 2605 seen in figure 26 is positioned normal to the optical axis, however according to other examples, the mirror 2605 may be angled with respect to the optical axis such that light incident on the transit section 2603 can be directed to different output ports 1701b.

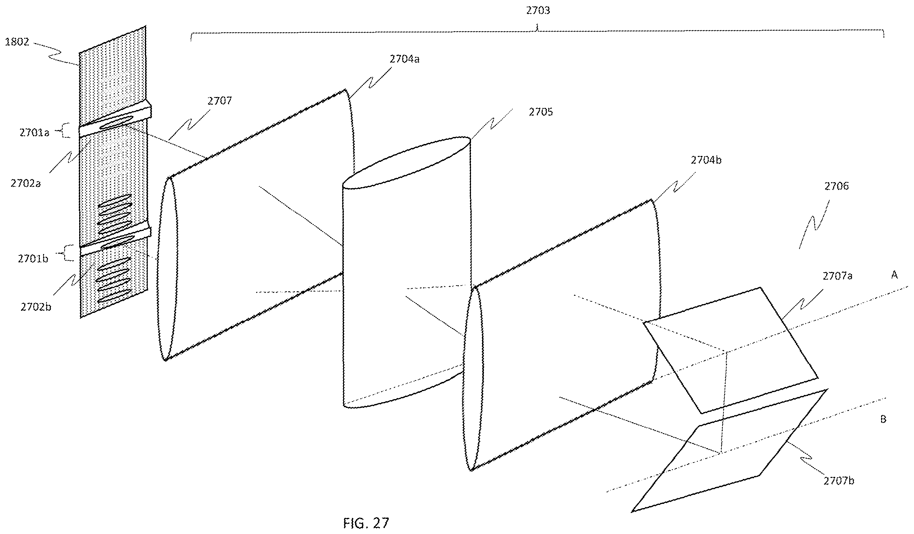

The demultiplexer 1802 may also comprise fewer or more transit input ports and/or output ports. For example, the demultiplexer 1802 may comprise only one transit input port 2701a and one transit output port 2701b as seen in Figure 27. Figure 27 illustrates an example of a demultiplexer 1802 and transit section 2703, where the demultiplexer comprises only one transit input port 2701a and one transit output port 2701b. Each transit port 2701 is positioned next to a gap in the ports 2102. Transit input port 2701a is positioned next to gap 2702a and transit output port 2701b is positioned next to gap 2702b. The mirrors located at the transit input port 2701a and transit output port 2701b may be at an angle to the surface of the demultiplexer 1802 but this is not required. The mirrors may be flush with the demultiplexer. In this case, channels selected for transit at the input transit port 2701a are sent directly to the output transit ports 2701b via transit section 2703. There is therefore a direct connection between the input transit port and output transit port without any switching.

The transit section 2703 comprises two lenses 2704a, 2704b having optical power along the steering axis. The transit section further comprises a lens 2705 having optical power along the dispersion axis. In the example seen in figure 27, lenses 2704, 2704b and 2705 are cylindrical lenses. The transit section further comprises a retroreflecting structure 2706. In the example seen in figure 27, the retroreflecting structure 2706 comprises two orthogonal mirrors 2707a, 2707b which are rotated relative to one another about parallel axes A and B. Each mirror is rotated about its respective axis by 45 degrees with respect to the optical axis. The mirrors 2707a, 2707b are therefore rotated with respect to one another by 90 degrees. According to other examples, the retroreflecting structure may be a prism. The transit section 2703 images the beam incident at transit input port 2701a to the mirror at transit output port 2701b.

For the optical path of the chief ray 2707 the lens 2705 has a focal length of a quarter of the distance between the respective mirrors at transit input port 2701a and transit output port 2701b, thereby forming a 4F imaging system between the two mirrors. The single 4F arrangement of the lens 2705 having optical power in the dispersion direction ensures the correct orientation of the spectra incident on transit output port 2701b so that the spectra can be properly multiplexed before exiting the output ports 1701b.

The focal length of each of the lenses 2704a, 2704b is equal to an eighth of the distance between the respective mirrors at transit input port 2701a and transit output port 2701b, thereby forming two 4F imaging systems between the two mirrors (a dual 4F arrangement). The dual 4F arrangement formed by lenses 2704a, 2704b forms a non-inverted real image in the steering direction at transit output port 2701b of the spectra incident on transit input port 2701a. An inverted image of the spectra incident on the first programmable deflection plane 1706a is formed at the second programmable deflection plane 1706b meaning there is a oneto-one mapping between the transit input port 2701a and the transit output port 2701b.

Although figures 26 and 27 illustrate transit sections 2603 and 2703 being positioned adjacent to the mirror optic 1704 and demultiplexer 1802 respectively, according to further examples, transit section 2603 may be implemented at the demultiplexer and transit section 2703 may be implemented at the mirror optic.

The edge ROADM switch described herein incorporates two adWSS or two MxN switches. As previously described, each MxN switch 1700a, 1700b is configured to operate so as to transfer signals from ports 1701a to ports 1702a, from ports 1701b to 1702b, from ports 1702a to ports 1701a and from ports 1702b to ports 1701b. According to one example, the edge ROADM switch operates so as to transfer signals from ports 1701a to ports 1702a of MxN switch 1700a, from ports 1702b to 1701b of MxN switch 1700b, and, using the transit section as described, from ports 1701a to 1701b (from MxN switch 1700a to switch 1700b). It is therefore the case that light from input ports 1701a which is not selected by the first programmable deflection plane 1706a for transit is deflected to the output ports 1702a. Light is which is selected for transit by the first programmable deflection plane 1706a and passes through the transit section is therefore merged with light coming from ports 1702b at the second programmable deflection plane 1706b and together is output at ports 1701b. It will be readily understood that further adWSS or MxN switches could be incorporated into a single switching device. Suitably, the programmable deflection planes described herein are SLM planes. The SLM plane may be a MEMS mirror array. The SLM plane may be an LCoS device. The LCoS device applies a hologram to enable a beam deflection. Alternatively, the SLM plane may be another locally configurable device capable of applying a deflection to a channel from the input.

In the examples described herein, the first and second (and in some cases third and fourth) programmable deflection planes are incorporated onto a single SLM device. This utilises fewer components, reduces control complexity and hence cost compared to if the programmable deflection planes are on separate SLM devices. Alternatively, the programmable deflection planes may be on separate SLM devices.

In the examples described herein, optical components are used to route data through the described switches. There is no absorption and re-emission of light, thereby avoiding the lag associated with transmitting data through electronical switches. The optical components also have lower power consumption than equivalent electronical implementations.

The examples described herein incorporate one or more diffraction grating. However, any demultiplexer which demultiplexes light signals into spatially separated data channels may be used instead of a diffraction grating in any of the examples. Similarly, any multiplexer which multiplexes spatially separated data channels into multiplexed light signals may be used instead of a diffraction grating in any of the examples. Any suitable optical dispersion device may be used as a multiplexer and/or a demultiplexer.

Lenses and other optical components described herein as single structures may be implemented using assemblies having a plurality of components which achieve the same optical effect. Examples of such assemblies are: achromatic doublets, achromatic triplets, Cook doublets, telescopes and microscopes for imaging lenses. The lenses described herein may be implemented using other optics with the same optical power. For example, a curved mirror may be used as a lens. For example, multiple lens elements, mirrors, mirror arrays, catadioptric systems, holographic optical elements or diffractive optical elements may be used as a lens. Separate elements, for example 4F lenses, with the same optical properties can be arranged as separate passes through or from a single physical element.

The examples described herein generally one or more mirrors. The term "mirror" may be used herein to refer to any reflective surface such as a metallic mirror, an interference layer, a total internal reflection surface (as a prism), a polarisation beamsplitter, or a diffractive or holographic surface.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims.

## Claims

1. An optical switch comprising:
a set of first input ports 401, each first input port 401 configured to transport an optical signal having at least one component frequency channel;
a set of first output ports 402, each first output port 402 configured to transport an optical signal having at least one component frequency channel;
a first programmable deflection plane 408 configured to deflect beams incident on it to form a first deflected array of beams;
a second programmable deflection plane 414 configured to deflect beams incident on it to form a second deflected array of beams;
a first demultiplexer 405a configured to separate light from the set of first input ports 401 into its component frequency channels to form the beams incident on the first programmable deflection plane 408;
a first multiplexer 405b configured to combine the second deflected array of beams from the second programmable deflection plane 414 into combined signals incident on the set of first output ports 402; and
a beam steering optical element group 409 configured to transfer the first deflected array of beams from the first programmable deflection plane 408 to the beams incident on the second programmable deflection plane 414;
**characterised by**:
wherein the incidence normal of the first programmable deflection plane 408 is within the same hemispherical angular area as the incidence normal of the second programmable deflection plane 414; and
wherein the dispersion direction in the dispersion plane of spectra of the beams formed on the second programmable deflection plane 414 with respect to the diffraction order of the first multiplexer 405b is such that the combined signals from the first multiplexer 405b match the set of first output ports 402.

2. An optical switch as claimed in claim 1, wherein the dispersion direction in the dispersion plane of the first multiplexer 405b is the same sign as the dispersion direction in the dispersion plane of the first demultiplexer 405a.

3. An optical switch as claimed in claim 2, wherein the first multiplexer 405b is the same as the first demultiplexer 405a.

4. An optical switch as claimed in claim 2 or 3, wherein the beam steering optical element group 409 is configured to form a non-inverted image of the first programmable deflection plane 408 on the second programmable deflection plane 414 in the dispersion plane, and the beam steering optical element group 409 is configured to form a Fourier conjugate image of the first programmable deflection plane 408 on the second programmable deflection plane 414 orthogonal to the dispersion plane.

5. An optical switch as claimed in claim 4, wherein the beam steering optical element group 409 comprises:
a first optical element 410 and a second optical element 411, the first and second optical elements configured to divert the first deflected array of beams from the first programmable deflection plane 408 towards a beam steering optical device 412;
the beam steering optical device 412 configured to redirect the diverted first deflected array of beams to form a redirected first deflected array of beams; and
a third optical element 413 and a fourth optical element 415, the third and fourth optical elements configured to divert the redirected first deflected array of beams from the beam steering optical device towards the second programmable deflection plane 414.

6. An optical switch as claimed in claim 5, wherein each of the first optical element 410, second optical element 411, third optical element 413, fourth optical element 415 and beam steering optical device 412 has optical power.

7. An optical switch as claimed in claim 1, wherein the dispersion direction in the dispersion plane of the first multiplexer 405b is the opposite sign as the dispersion direction in the dispersion plane of the first demultiplexer 405a.

8. An optical switch as claimed in claim 7, wherein the beam steering optical element group 409 is configured to form an inverted image of the first programmable deflection plane 408 on the second programmable deflection plane 414 in the dispersion plane, and a Fourier conjugate image of the first programmable deflection plane 408 on the second programmable deflection plane 414 orthogonal to the dispersion plane.

9. An optical switch as claimed in claim 8, wherein the beam steering optical element group 409 comprises:
a first optical element 710 configured to divert the first deflected array of beams from the first programmable deflection plane 408 towards a beam steering optical device;
the beam steering optical device 712 configured to redirect the diverted first deflected array of beams to form a redirected first deflected array of beams; and
a second optical element 715 configured to divert the redirected first deflected array of beams from the beam steering optical device 712 towards the second programmable deflection plane 414.

10. An optical switch as claimed in claim 9, wherein each of the first optical element 710, second optical element 715 and beam steering optical device 712 has optical power.

11. A reconfigurable optical add-drop multiplexer (ROADM) optical switch 1000 comprising the optical switch of any of claims 1 to 10, and further comprising:
a set of second input ports 1001, each second input port configured to transport an optical signal having at least one component frequency channel;
a set of second output ports 1002, each second output port configured to transport an optical signal having at least one component frequency channel;
a third programmable deflection plane 907 configured to deflect beams from the set of second input ports incident on it to form a third deflected array of beams;
a fourth programmable deflection plane 907 configured to deflect beams incident on it to form a fourth deflected array of beams towards the set of second output ports;
a second demultiplexer 905a configured to separate light from the third programmable deflection plane into its component frequency channels towards the second programmable deflection plane 414;
a second multiplexer configured to combine the first deflected array of beams from the first programmable deflection plane 408 into combined signals towards the fourth programmable deflection plane;
wherein the incidence normal of each of the first, second, third and fourth programmable deflection planes is within the same hemispherical angular area; and
wherein the first demultiplexer 405a and second multiplexer have the same dispersion direction; and
wherein the second demultiplexer and first multiplexer 405b have the same dispersion direction.

12. A reconfigurable optical add-drop multiplexer (ROADM) optical switch as claimed in claim 11, wherein the first demultiplexer 405a is the same as the second multiplexer, and the second demultiplexer is the same as the first multiplexer 405b.

13. A reconfigurable optical add-drop multiplexer (ROADM) optical switch as claimed in claim 11 or 12, comprising a single spatial light modulator (SLM) panel comprising the first, second, third and fourth programmable deflection planes.

14. An optical switch as claimed in any of claims 1 to 10, comprising a single spatial light modulator (SLM) panel comprising the first and second programmable deflection planes 408, 414.

15. An optical switch as claimed in any preceding claim, wherein the switch further comprises:
a mirror optic 1704a, the mirror optic comprising a pair of mirrors separated by a gap; and
a further mirror optic 1704b, the further mirror optic comprising a pair of mirrors separated by a gap.

## Patentansprüche

1. Optischer Schalter, umfassend:
einen Satz erster Eingangsports 401, wobei jeder erste Eingangsport 401 dazu konfiguriert ist, ein optisches Signal mit zumindest einem Komponentenfrequenzkanal zu transportieren;
einen Satz erster Ausgangsports 402, wobei jeder erste Ausgangsport 402 dazu konfiguriert ist, ein optisches Signal mit zumindest einem Komponentenfrequenzkanal zu transportieren;
eine erste programmierbare Ablenkebene 408, die dazu konfiguriert ist, auf sie einfallende Strahlen abzulenken, um eine erste abgelenkte Strahlenanordnung zu bilden;
eine zweite programmierbare Ablenkebene 414, die dazu konfiguriert ist, auf sie einfallende Strahlen abzulenken, um eine zweite abgelenkte Strahlenanordnung zu bilden;
einen ersten Demultiplexer 405a, der dazu konfiguriert ist, Licht aus dem Satz erster Eingangsports 401 in seine Komponentenfrequenzkanäle zu trennen, um die auf die erste programmierbare Ablenkebene 408 einfallenden Strahlen zu bilden;
einen ersten Multiplexer 405b, der dazu konfiguriert ist, die zweite abgelenkte Strahlenanordnung von der zweiten programmierbaren Ablenkebene 414 zu kombinierten Signalen zu kombinieren, die auf den Satz erster Ausgangsports 402 einfallen; und
eine optische Strahlsteuerungselementgruppe 409, die dazu konfiguriert ist, die erste abgelenkte Strahlenanordnung von der ersten programmierbaren Ablenkebene 408 auf die auf die zweite programmierbare Ablenkebene 414 einfallenden Strahlen zu übertragen;
**gekennzeichnet durch**:
wobei die Einfallsnormale der ersten programmierbaren Ablenkebene 408 innerhalb derselben halbkugelförmigen Winkelfläche wie die Einfallsnormale der zweiten programmierbaren Ablenkebene 414 liegt; und
wobei die Dispersionsrichtung in der Dispersionsebene von Spektren der auf der zweiten programmierbaren Ablenkebene 414 gebildeten Strahlen in Bezug auf die Diffraktionsordnung des ersten Multiplexers 405b derart ist, dass die kombinierten Signale von dem ersten Multiplexer 405b mit dem Satz erster Ausgangsports 402 übereinstimmen.

2. Optischer Schalter, wie in Anspruch 1 beansprucht, wobei die Dispersionsrichtung in der Dispersionsebene des ersten Multiplexers 405b dasselbe Vorzeichen wie die Dispersionsrichtung in der Dispersionsebene des ersten Demultiplexers 405a aufweist.

3. Optischer Schalter, wie in Anspruch 2 beansprucht, wobei der erste Multiplexer 405b derselbe ist wie der erste Demultiplexer 405a.

4. Optischer Schalter, wie in Anspruch 2 oder 3 beansprucht, wobei die optische Strahlsteuerungselementgruppe 409 dazu konfiguriert ist, ein nicht invertiertes Bild der ersten programmierbaren Ablenkebene 408 auf der zweiten programmierbaren Ablenkebene 414 in der Dispersionsebene zu bilden, und die optische Strahlsteuerungselementgruppe 409 dazu konfiguriert ist, ein Fourier-konjugiertes Bild der ersten programmierbaren Ablenkebene 408 auf der zweiten programmierbaren Ablenkebene 414 orthogonal zu der Dispersionsebene zu bilden.

5. Optischer Schalter, wie in Anspruch 4 beansprucht, wobei die optische Strahlsteuerungselementgruppe 409 Folgendes umfasst:
ein erstes optisches Element 410 und ein zweites optisches Element 411, wobei das erste und zweite optische Element dazu konfiguriert sind, die erste abgelenkte Strahlenanordnung von der ersten programmierbaren Ablenkebene 408 in Richtung einer optischen Strahlsteuerungsvorrichtung 412 umzulenken;
die optische Strahlsteuerungsvorrichtung 412, die dazu konfiguriert ist, die umgelenkte erste abgelenkte Strahlenanordnung umzuleiten, um eine umgeleitete erste abgelenkte Strahlenanordnung zu bilden; und
ein drittes optisches Element 413 und ein viertes optisches Element 415, wobei das dritte und vierte optische Element dazu konfiguriert sind, die umgeleitete erste abgelenkte Strahlenanordnung von der optischen Strahlsteuerungsvorrichtung in Richtung der zweiten programmierbaren Ablenkebene 414 umzulenken.

6. Optischer Schalter, wie in Anspruch 5 beansprucht, wobei jedes von dem ersten optischen Element 410, dem zweiten optischen Element 411, dem dritten optischen Element 413, dem vierten optischen Element 415 und der optischen Strahlsteuerungsvorrichtung 412 optische Leistung aufweist.

7. Optischer Schalter, wie in Anspruch 1 beansprucht, wobei die Dispersionsrichtung in der Dispersionsebene des ersten Multiplexers 405b das entgegengesetzte Vorzeichen wie die Dispersionsrichtung in der Dispersionsebene des ersten Demultiplexers 405a aufweist.

8. Optischer Schalter, wie in Anspruch 7 beansprucht,, wobei die optische Strahlsteuerungselementgruppe 409 dazu konfiguriert ist, ein invertiertes Bild der ersten programmierbaren Ablenkebene 408 auf der zweiten programmierbaren Ablenkebene 414 in der Dispersionsebene und ein Fourier-konjugiertes Bild der ersten programmierbaren Ablenkebene 408 auf der zweiten programmierbaren Ablenkebene 414 orthogonal zu der Dispersionsebene zu bilden.

9. Optischer Schalter, wie in Anspruch 8 beansprucht, wobei die optische Strahlsteuerungselementgruppe 409 Folgendes umfasst:
ein erstes optisches Element 710, das dazu konfiguriert ist, die erste abgelenkte Strahlenanordnung von der ersten programmierbaren Ablenkebene 408 in Richtung einer optischen Strahlsteuerungsvorrichtung umzulenken;
die optische Strahlsteuerungsvorrichtung 712, die dazu konfiguriert ist, die umgelenkte erste abgelenkte Strahlenanordnung umzuleiten, um eine umgeleitete erste abgelenkte Strahlenanordnung zu bilden; und
ein zweites optisches Element 715, das dazu konfiguriert ist, die umgeleitete erste abgelenkte Strahlenanordnung von der optischen Strahlsteuerungsvorrichtung 712 in Richtung der zweiten programmierbaren Ablenkebene 414 umzulenken.

10. Optischer Schalter, wie in Anspruch 9 beansprucht, wobei jedes von dem ersten optischen Element 710, dem zweiten optischen Element 715 und der optischen Strahlsteuerungsvorrichtung 712 optische Leistung aufweist.

11. Rekonfigurierbarer optischer Add-Drop-Multiplexer (ROADM) optischer Schalter 1000, umfassend den optischen Schalter nach einem der Ansprüche 1 bis 10, und ferner umfassend:
einen Satz zweiter Eingangsports 1001, wobei jeder zweite Eingangsport dazu konfiguriert ist, ein optisches Signal mit zumindest einem Komponentenfrequenzkanal zu transportieren;
einen Satz zweiter Ausgangsports 1002, wobei jeder zweite Ausgangsport dazu konfiguriert ist, ein optisches Signal mit zumindest einem Komponentenfrequenzkanal zu transportieren;
eine dritte programmierbare Ablenkebene 907, die dazu konfiguriert ist, auf sie einfallende Strahlen aus dem Satz zweiter Eingangsports abzulenken, um eine dritte abgelenkte Strahlenanordnung zu bilden;
eine vierte programmierbare Ablenkebene 907, die dazu konfiguriert ist, auf sie einfallende Strahlen abzulenken, um eine vierte abgelenkte Strahlenanordnung in Richtung des Satzes zweiter Ausgangsports zu bilden;
einen zweiten Demultiplexer 905a, der dazu konfiguriert ist, Licht von der dritten programmierbaren Ablenkebene in seine Komponentenfrequenzkanäle in Richtung der zweiten programmierbaren Ablenkebene 414 zu trennen;
einen zweiten Multiplexer, der dazu konfiguriert ist, die erste abgelenkte Strahlenanordnung von der ersten programmierbaren Ablenkebene 408 in kombinierte Signale in Richtung der vierten programmierbaren Ablenkebene zu kombinieren;
wobei die Einfallsnormale jeder von der ersten, zweiten, dritten und vierten programmierbaren Ablenkebene innerhalb derselben halbkugelförmigen Winkelfläche liegt; und
wobei der erste Demultiplexer 405a und der zweite Multiplexer dieselbe Dispersionsrichtung aufweisen; und
wobei der zweite Demultiplexer und der erste Multiplexer 405b dieselbe Dispersionsrichtung aufweisen.

12. Rekonfigurierbarer optischer Add-Drop-Multiplexer (ROADM) optischer Schalter, wie in Anspruch 11 beansprucht, wobei der erste Demultiplexer 405a derselbe ist wie der zweite Multiplexer und der zweite Demultiplexer derselbe ist wie der erste Multiplexer 405b.

13. Rekonfigurierbarer optischer Add-Drop-Multiplexer (ROADM) optischer Schalter, wie in Anspruch 11 oder 12 beansprucht, umfassend eine einzelne räumliche Lichtmodulator-(SLM-)Platte, die die erste, zweite, dritte und vierte programmierbare Ablenkebene umfasst.

14. Optischer Schalter, wie in einem der Ansprüche 1 bis 10 beansprucht, umfassend eine einzelne räumliche Lichtmodulator- (SLM-)Platte, umfassend die erste und zweite programmierbare Ablenkebene 408, 414.

15. Optischer Schalter, wie in einem der vorhergehenden Ansprüche beansprucht, wobei der Schalter ferner Folgendes umfasst:
eine Spiegeloptik 1704a, wobei die Spiegeloptik ein Paar Spiegel umfasst, die durch einen Spalt getrennt sind; und
eine fernere Spiegeloptik 1704b, wobei die fernere Spiegeloptik ein Paar von Spiegeln umfasst, die durch einen Spalt getrennt sind.

## Revendications

1. Commutateur optique comprenant :
un ensemble de premiers orifices d'entrée 401, chaque premier orifice d'entrée 401 étant configuré pour transporter un signal optique présentant au moins un canal de fréquence de composant ;
un ensemble de premiers orifices de sortie 402, chaque premier orifice de sortie 402 étant configuré pour transporter un signal optique présentant au moins un canal de fréquence de composant ;
un premier plan de déviation programmable 408 configuré pour dévier des faisceaux incidents sur celui-ci pour former un premier réseau de faisceaux déviés ;
un deuxième plan de déviation programmable 414 configuré pour dévier des faisceaux incidents sur celui-ci pour former un deuxième réseau de faisceaux déviés ;
un premier démultiplexeur 405a configuré pour séparer de la lumière en provenance de l'ensemble de premiers orifices d'entrée 401 en ses canaux de fréquence de composant pour former les faisceaux incidents sur le premier plan de déviation programmable 408 ;
un premier multiplexeur 405b configuré pour combiner le deuxième réseau de faisceaux déviés en provenance du deuxième plan de déviation programmable 414 en signaux combinés incidents sur l'ensemble de premiers orifices de sortie 402 ; et
un groupe d'éléments optiques d'orientation de faisceau 409 configuré pour transférer le premier réseau de faisceaux déviés en provenance du premier plan de déviation programmable 408 aux faisceaux incidents sur le deuxième plan de déviation programmable 414 ;
**caractérisé par** :
dans lequel la normale d'incidence du premier plan de déviation programmable 408 est au sein de la même zone angulaire hémisphérique que la normale d'incidence du deuxième plan de déviation programmable 414 ; et
dans lequel la direction de dispersion dans le plan de dispersion de spectres des faisceaux formés sur le deuxième plan de déviation programmable 414 par rapport à l'ordre de diffraction du premier multiplexeur 405b est telle que les signaux combinés en provenance du premier multiplexeur 405b correspondent à l'ensemble de premiers orifices de sortie 402.

2. Commutateur optique selon la revendication 1, dans lequel la direction de dispersion dans le plan de dispersion du premier multiplexeur 405b est du même signe que la direction de dispersion dans le plan de dispersion du premier démultiplexeur 405a.

3. Commutateur optique selon la revendication 2, dans lequel le premier multiplexeur 405b est identique au premier démultiplexeur 405a.

4. Commutateur optique selon la revendication 2 ou 3, dans lequel le groupe d'éléments optiques d'orientation de faisceau 409 est configuré pour former une image non inversée du premier plan de déviation programmable 408 sur le deuxième plan de déviation programmable 414 dans le plan de dispersion, et le groupe d'éléments optiques d'orientation de faisceau 409 est configuré pour former une image conjuguée de Fourier du premier plan de déviation programmable 408 sur le deuxième plan de déviation programmable 414 orthogonal au plan de dispersion.

5. Commutateur optique selon la revendication 4, dans lequel le groupe d'éléments optiques d'orientation de faisceau 409 comprend :
un premier élément optique 410 et un deuxième élément optique 411, les premier et deuxième éléments optiques étant configurés pour détourner le premier réseau de faisceaux déviés en provenance du premier plan de déviation programmable 408 vers un dispositif optique d'orientation de faisceau 412 ;
le dispositif optique d'orientation de faisceau 412 étant configuré pour rediriger le premier réseau de faisceaux déviés détourné pour former un premier réseau de faisceaux déviés redirigé ; et
un troisième élément optique 413 et un quatrième élément optique 415, les troisième et quatrième éléments optiques étant configurés pour détourner le premier réseau de faisceaux déviés redirigé en provenance du dispositif optique d'orientation de faisceau vers le deuxième plan de déviation programmable 414.

6. Commutateur optique selon la revendication 5, dans lequel chacun du premier élément optique 410, du deuxième élément optique 411, du troisième élément optique 413, du quatrième élément optique 415 et du dispositif optique d'orientation de faisceau 412 présente une puissance optique.

7. Commutateur optique selon la revendication 1, dans lequel la direction de dispersion dans le plan de dispersion du premier multiplexeur 405b est du signe opposé à la direction de dispersion dans le plan de dispersion du premier démultiplexeur 405a.

8. Commutateur optique selon la revendication 7, dans lequel le groupe d'éléments optiques d'orientation de faisceau 409 est configuré pour former une image inversée du premier plan de déviation programmable 408 sur le deuxième plan de déviation programmable 414 dans le plan de dispersion, et une image conjuguée de Fourier du premier plan de déviation programmable 408 sur le deuxième plan de déviation programmable 414 orthogonal au plan de dispersion.

9. Commutateur optique selon la revendication 8, dans lequel le groupe d'éléments optiques d'orientation de faisceau 409 comprend :
un premier élément optique 710 configuré pour détourner le premier réseau de faisceaux déviés en provenance du premier plan de déviation programmable 408 vers un dispositif optique d'orientation de faisceau ;
le dispositif optique d'orientation de faisceau 712 étant configuré pour rediriger le premier réseau de faisceaux déviés détourné pour former un premier réseau de faisceaux déviés redirigé ; et
un deuxième élément optique 715 configuré pour détourner le premier réseau de faisceaux déviés redirigé en provenance du dispositif optique d'orientation de faisceau 712 vers le deuxième plan de déviation programmable 414.

10. Commutateur optique selon la revendication 9, dans lequel chacun du premier élément optique 710, du deuxième élément optique 715 et du dispositif optique d'orientation de faisceau 712 présente une puissance optique.

11. Commutateur optique 1000 à multiplexeur d'insertion-extraction optique reconfigurable (ROADM) comprenant le commutateur optique de l'une quelconque des revendications 1 à 10, et comprenant en outre :
un ensemble de seconds orifices d'entrée 1001, chaque second orifice d'entrée étant configuré pour transporter un signal optique présentant au moins un canal de fréquence de composant ;
un ensemble de seconds orifices de sortie 1002, chaque second orifice de sortie étant configuré pour transporter un signal optique présentant au moins un canal de fréquence de composant ;
un troisième plan de déviation programmable 907 configuré pour dévier des faisceaux en provenance de l'ensemble de seconds orifices d'entrée incidents sur celui-ci pour former un troisième réseau de faisceaux déviés ;
un quatrième plan de déviation programmable 907 configuré pour dévier des faisceaux incidents sur celui-ci pour former un quatrième réseau de faisceaux déviés vers l'ensemble de seconds orifices de sortie ;
un deuxième démultiplexeur 905a configuré pour séparer de la lumière en provenance du troisième plan de déviation programmable en ses canaux de fréquence de composant vers le deuxième plan de déviation programmable 414 ;
un deuxième multiplexeur configuré pour combiner le premier réseau de faisceaux déviés en provenance du premier plan de déviation programmable 408 en signaux combinés vers le quatrième plan de déviation programmable ;
dans lequel la normale d'incidence de chacun des premier, deuxième, troisième et quatrième plans de déviation programmables est au sein de la même zone angulaire hémisphérique ; et
dans lequel le premier démultiplexeur 405a et le second multiplexeur présentent la même direction de dispersion ; et
dans lequel le second démultiplexeur et le premier multiplexeur 405b présentent la même direction de dispersion.

12. Commutateur optique à multiplexeur d'insertion-extraction optique reconfigurable (ROADM) selon la revendication 11, dans lequel le premier démultiplexeur 405a est identique au second multiplexeur, et le second démultiplexeur est identique au premier multiplexeur 405b.

13. Commutateur optique à multiplexeur d'insertion-extraction optique reconfigurable (ROADM) selon la revendication 11 ou 12, comprenant un panneau de modulateur de lumière spatial (SLM) unique comprenant les premier, deuxième, troisième et quatrième plans de déviation programmables.

14. Commutateur optique selon l'une quelconque des revendications 1 à 10, comprenant un panneau de modulateur de lumière spatial (SLM) unique comprenant les premier et deuxième plans de déviation programmables 408, 414.

15. Commutateur optique selon une quelconque revendication précédente, dans lequel le commutateur comprend en outre :
une optique miroir 1704a, l'optique miroir comprenant une paire de miroirs séparés par un espace ; et
une optique miroir supplémentaire 1704b, l'optique miroir supplémentaire comprenant une paire de miroirs séparés par un espace.
